# EUROPÄISCHE PATENTSCHRIFT

(11) **EP 0 485 893 B1**
(45) Veröffentlichungstag und Bekanntmachung des Hinweises auf die Patenterteilung: **22.04.1998**
(21) Anmeldenummer: 91119005.6
(22) Anmeldetag: 07.11.1991
(51) Int. Cl.: C08F 32/08

(54) **Massepolymerisation mit speziellen Metallocenkatalysatoren zur Herstellung von Cycloolefinpolymeren**
Bulk polymerisation with metallocene catalyst for the preparation of cycloolefin polymers
Polymérisation en masse avec des catalyseurs métallocènes pour la préparation de polymères de cyclooléfines

(30) Priorität: 14.11.1990 DE 4036264
(43) Veröffentlichungstag der Anmeldung: 20.05.1992
(73) Patentinhaber: Ticona GmbH, 65926 Frankfurt am Main (DE)
(72) Erfinder: Brekner, Michael-Joachim, Dr., W-6000 Frankfurt am Main (DE); Osan, Frank, Dr., W-6233 Kelkheim (Taunus) (DE); Rohrmann, Jürgen, Dr., W-6233 Kelkheim (Taunus) (DE); Antberg, Martin, Dr., W-6238 Hofheim am Taunus (DE)

(56) Entgegenhaltungen:
- EP-A- 0 283 164
- EP-A- 0 304 671
- EP-A- 0 358 103
- EP-A- 0 407 870
- EP-A- 0 690 078
- DE-A- 3 835 044

## Beschreibung

### Beschreibung für folgende Vertragsstaaten : BE, DE, ES, FR, GB, IT, NL

Die Erfindung bezieht sich auf ein Verfahren zur Herstellung von Homo- und Copolymeren von polycyclischen Olefinen, wobei keine Ringöffnung erfolgt.

Es ist bekannt, daß polycyclische Olefine mittels verschiedener Ziegler-Katalysatoren polymerisiert werden können. Die Polymerisation verläuft in Abhängigkeit vom Katalysator über Ringöffnung (vgl. US 4 178 424) oder Öffnung der Doppelbindung (vgl. EP-A-156 464, EP-A-283 164).

Der Nachteil einer ringöffnenden Polymerisation besteht darin, daß das erhaltene Polymerisat Doppelbindungen enthält, die zu Kettenvernetzungen führen können und damit die Verarbeitbarkeit des Materials durch Extrudieren oder Spritzgießen erheblich einschränken.

Die Polymerisation unter Öffnung der Doppelbindung führt bei cyclischen Olefinen zu einer relativ niederen Polymerisationsgeschwindigkeit (Umsatzrate).

Eine gewisse Erhöhung der Reaktionsgeschwindigkeit wurde durch die Verwendung löslicher Metallocenverbindungen wie Bis-(Cyclopentadienyl)-zirkoniumdichlorid erreicht (vgl. JP 61-221206).

Als Katalysator läßt sich bei cyclischen Olefinen eine stereorigide chirale Metallocenverbindung wie z.B. Ethylenbis(indenyl)zirkoniumdichlorid (vgl. EP-A 283164) oder Dimethylsilyl-bis(indenyl)zirkoniumdichlorid (vgl. EP-A-407 870) verwenden, wobei die Polymerisation unter Erhalt des Ringes erfolgt.

Nach heutigem Stand der Technik werden die Homo- und Copolymerisation von Cycloolefinen in Gegenwart löslicher Metallocenkatalysatoren in Lösung durchgeführt, wobei als Lösungsmittel hauptsächlich Kohlenwasserstoffe eingesetzt werden.

Versuche haben gezeigt, daß bei den dem Stand der Technik entsprechenden Polymerisationsbedingungen in Lösung und bei relativ niedrigen Drucken, die in der Regel unter 10 bar liegen, die Raum-Zeit-Ausbeute (Reaktionsgeschwindigkeit) mit zunehmender Konzentration des Cycloolefins im Reaktionsmedium abnimmt, d.h. auch mit zunehmender Einbaurate des Cycloolefins. Beispiele entsprechender Cycloolefine sind Norbornen und Tetracyclododecen. Die geringe Raum-Zeit-Ausbeute bei einem hohen Cycloolefineinbau macht die Herstellung von Cycloolefincopolymeren mit hohem Cycloolefingehalt sehr aufwendig und wirtschaftlich ungünstig.

Dabei zeigen Cycloolefincopolymere mit einer hohen Einbaurate an Cycloolefin aufgrund ihrer hohen Glastemperatur eine sehr hohe thermische Formbeständigkeit. Sie sind daher interessante Werkstoffe, die als thermoplastische Formmassen oder in Form von Lösungen für Oberflächenbeschichtungen vorteilhaft einsetzbar sein sollten. Versuche haben jedoch gezeigt, daß solche Lösungen insbesondere wegen ihrer Neigung zur Vergelung nur bei hohen Temperaturen zu verarbeiten sind.

Aus EP-A-358 103 ist ein Verfahren zur Herstellung eines Polymers oder Copolymers bekannt. Das Verfahren umfaßt die Polymerisation einer ungesättigten Kohlenwasserstoffverbindung in Gegenwart eines Katalysators, der eine Übergangsmetallverbindung und eine Aluminoxanverbindung enthält.

Aus EP-A-407 870 sind Polymerisate von polycyclischen Olefinen mit einer Viskositätszahl größer 20 cm³/g und einer Glastemperatur oberhalb 100°C bekannt. Die Polymerisate erhält man ohne Ringöffnung mit einer hohen Polymerisationsgeschwindigkeit bei technisch günstigen Polymerisationstemperaturen mittels eines Katalysators, welcher aus einer stereorigiden Metallocenverbindung der Gruppen IVb bis Vlb des Periodensystems der Elemente und einem Aluminoxan besteht.

Aus DE-A-38 35 044 sind Mono- und Copolymerisate von polycyclischen Olefinen bekannt. Die Mono- und Copolymerisate werden ohne Ringöffnung mit einer hohen Polymerisationsgeschwindigkeit bei günstigen Polymerisationstemperaturen mittels eines Katalysators erhalten, welcher aus einer stereorigiden chiralen Metallocenverbindung der Gruppen IVb bis VIb des Periodensystems der Elemente und einem Aluminoxan besteht.

Es bestand daher die Aufgabe, ein Verfahren zur Herstellung von Cycloolefinhomo- und -copolymeren zu finden, das, basierend auf der Polymerisation über die Doppelbindung, bei hoher Raum-Zeit-Ausbeute Copolymere mit einer hohen Cycloolefineinbaurate liefert, welche in Lösung bei Raumtemperatur nicht vergelen.

Es wurde gefunden, daß durch die Wahl bestimmter Reaktionsbedingungen und bei Verwendung bestimmter Metallocenkatalysatoren diese Aufgabe gelöst werden kann. Wichtig ist dabei, daß die Polymerisation in dem flüssigen Cycloolefin selbst oder in äußerst konzentrierten Cycloolefinlösungen durchgeführt wird, wobei zweckmäßigerweise die Temperatur oberhalb Raumtemperatur und der Druck oberhalb 1 bar liegt.

Die Erfindung betrifft somit ein Verfahren zur Herstellung eines Cycloolefinpolymers oder -copolymers durch Polymerisation von 0,1 bis 100 Gew.-%, bezogen auf die Gesamtmenge der Monomeren, mindestens eines Monomers der Formeln I, II, III, IV, V oder VI 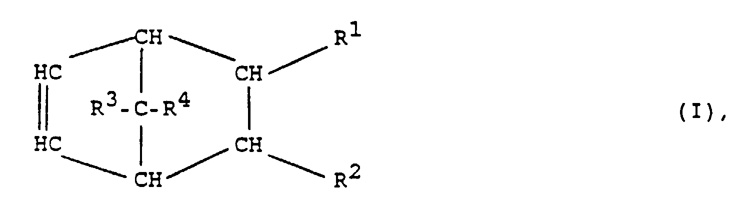 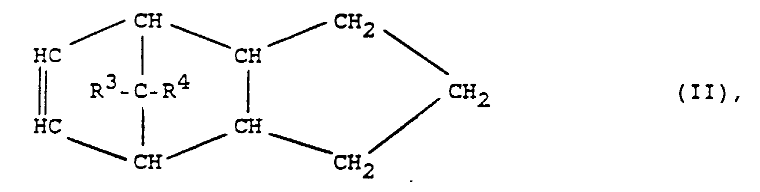 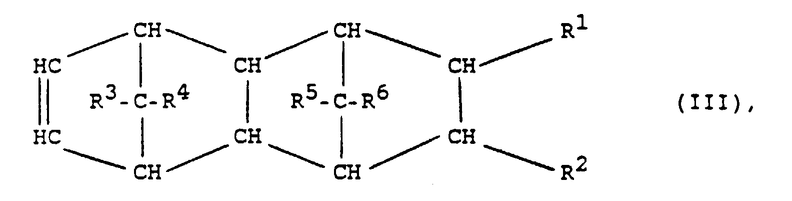 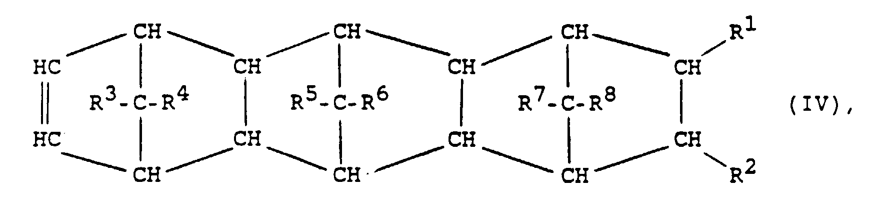 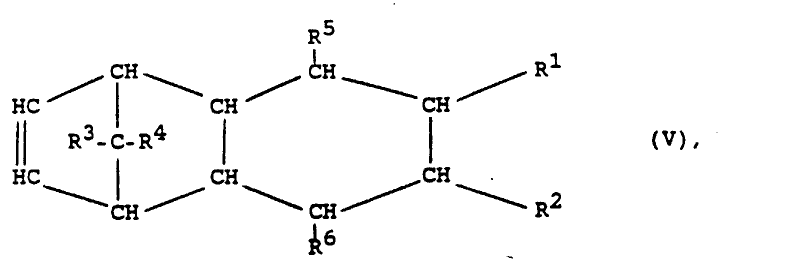 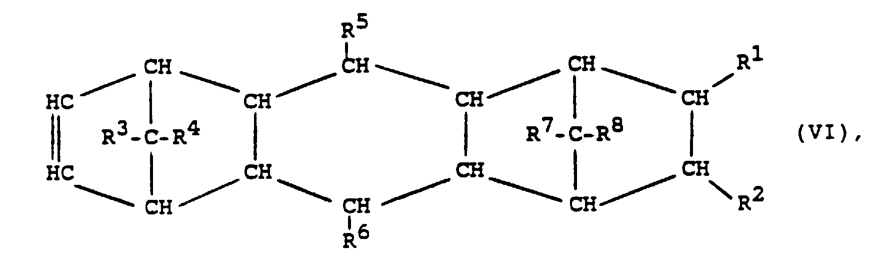 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können,
0 bis 99,9 Gew.-%, bezogen auf die Gesamtmenge der Monomeren, eines Cycloolefins der Formel VII 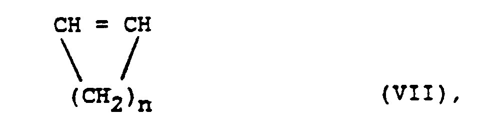 worin n eine Zahl von 2 bis 10 ist, und
0 bis 99,9 Gew.-%, bezogen auf die Gesamtmenge der Monomeren, mindestens eines acyclischen 1-Olefins der Formel VIII 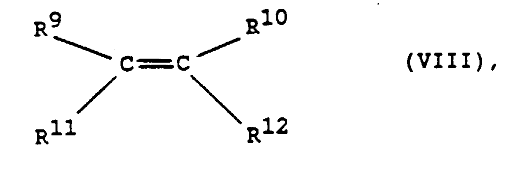 worin R⁹, R¹⁰, R¹¹ und R¹² gleich oder verschieden sind und ein Wasserstoffatom oder einen C₁-C₈-Alkylrest bedeuten, bei Temperaturen von 20 bis 150°C und einem Druck von 0,01 bis 64 bar, in Gegenwart eines Katalysators, welcher aus einem Aluminoxan der Formel IX 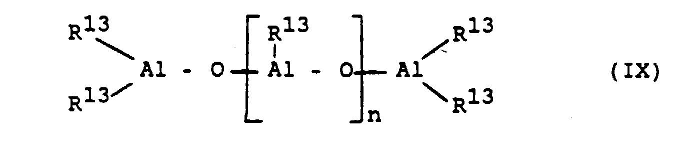 für den linearen Typ und/oder der Formel X 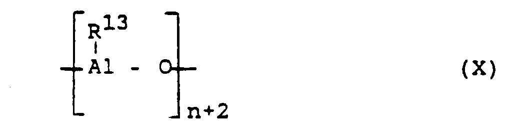 für den cyclischen Typ, wobei in den Formeln IX und X R¹³ eine C₁-C₆-Alkylgruppe oder Phenyl oder Benzyl bedeutet und n eine ganze Zahl von 2 bis 50 ist, und einem Metallocen der Formel XI 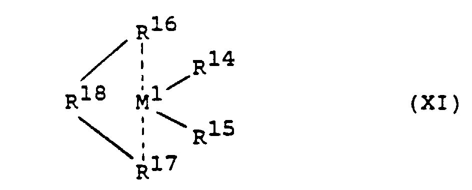 besteht, worin
- M¹: Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Aryloxygruppe, eine C₆-C₁₀-Alkenylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- R¹⁶ und R¹⁷: verschieden sind und einen ein- oder mehrkernigen Kohlenwasserstoffrest, welcher mit dem Zentralatom M¹ eine Sandwichstruktur bilden kann,
bedeuten,
- R¹⁸: 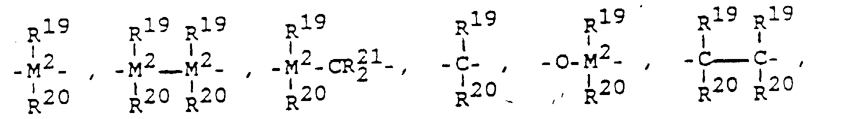 = BR¹⁹, = AlR¹⁹, -Ge-, -Sn-, -O-, -S- ,= SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
- M²: Silizium, Germanium oder Zinn ist, wobei die Polymerisation in dem flüssigen Cycloolefinmonomer oder Cycloolefinmonomergemisch oder in einer mindestens 95-volumenprozentigen Cycloolefinlösung durchgeführt wird und die Polymerlösung nach der Polymerisation in einem Dünnschichtverdampfer aufkonzentriert wird.

Bevorzugt wird im flüssigen Cycloolefinmonomer oder Cycloolefinmonomergemisch polymerisiert.

Im erfindungsgemäßen Verfahren wird mindestens ein polycyclisches Olefin der Formeln I, II, III, IV, V oder VI vorzugsweise ein Cycloolefin der Formeln I oder III, worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, polymerisiert.
Gegebenenfalls wird auch ein monocyclisches Olefin der Formel VII 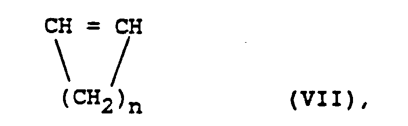 worin n eine Zahl von 2 bis 10 ist, verwendet. Ein anderes Comonomer ist ein acyclisches 1-Olefin der Formel VIII, 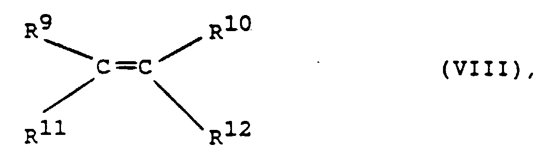 worin R⁹, R¹⁰, R¹¹ und R¹² gleich oder verschieden sind und ein Wasserstoffatom oder einen C₁-C₈-Alkylrest bedeuten. Bevorzugt sind Ethylen oder Propylen.

Insbesondere werden Copolymere von polycyclischen Olefinen, vorzugsweise der Formeln I und III, mit den acyclischen Olefinen VIII hergestellt.

Besonders bevorzugte Cycloolefine sind Norbornen und Tetracyclododecen, wobei diese durch (C₁-C₆)-Alkyl substituiert sein können. Sie werden vorzugsweise mit Ethylen copolymerisiert; besondere Bedeutung besitzen Ethylen/Norbornen-Copolymere.

Das polycyclische Olefin (I bis VI) wird in einer Menge von 0,1 bis 100 Gew.-% und das monocyclische Olefin (VII) in einer Menge von 0 bis 99,9 Gew.-% jeweils bezogen auf die Gesamtmenge der Monomeren, eingesetzt.

Die Konzentration des offenkettigen Olefins ergibt sich aus der Löslichkeit des offenkettigen Olefins in dem Reaktionsmedium bei gegebenem Druck und gegebener Temperatur.

Als polycyclische Olefine, monocyclische Olefine und offenkettige Olefine sind auch Gemische zweier oder mehrerer Olefine des jeweiligen Typs zu verstehen. Das heißt, es können neben polycyclischen Homopolymeren und Bicopolymeren auch Ter- und Multicopolymere nach dem erfindungsgemäßen Verfahren hergestellt werden. Auch Copolymere der Cycloolefine VII mit den acyclischen Olefinen VIII lassen sich vorteilhaft nach dem beschriebenen Verfahren erhalten. Von den Cycloolefinen VII ist Cyclopenten, das substituiert sein kann, bevorzugt.

Der für das erfindungsgemäße Verfahren zu verwendende Katalysator besteht aus einem Aluminiumoxan und mindestens einem Metallocen (Übergangsmetallkomponente) der Formel XI

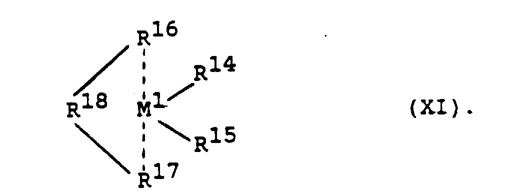

In Formel XI ist M¹ ein Metall aus der Gruppe Titan, Zirkon, Hafnium, Vanadium, Niob und Tantal, vorzugsweise Zirkon und Hafnium. Besonders bevorzugt wird Zirkon verwendet.

R¹⁴ und R¹⁵ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R¹⁶ und R¹⁷ sind verschieden und bedeuten einen ein- oder mehrkernigen Kohlenwasserstoffrest, welcher mit dem Zentralatom M¹ eine Sandwichstruktur bilden kann. Bevorzugt sind R¹⁶ Fluorenyl und R¹⁷ Cyclopentadienyl.

R¹⁸ ist eine ein- oder mehrgliedrige Brücke, welche die Reste R¹⁶ und R¹⁷ verknüpft und bedeutet vorzugsweise 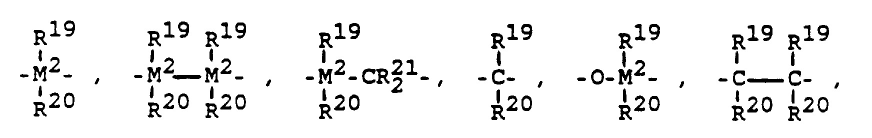 = BR¹⁹ = AlR¹⁹, -Ge-, -Sn-, -O-, -S-,= SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Alkenylgruppe, eine C₁-C₁₀-Alkoxygruppe, eine C₂-C₁₀-Alkenylgruppe, eine C₇-C₄₀-Arylalkylgruppe, eine C₆-C₄₀-Arylalkenylgruppe oder eine C₇-C₄₀-Alkylarylgruppe bedeuten, oder R¹⁹ und R²⁰ oder R¹⁹ und R²¹ bilden jeweils zusammen mit den sie verbindenden Atomen einen Ring.

Bevorzugt ist R¹⁸ ein Rest 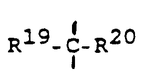 und besonders bevorzugt 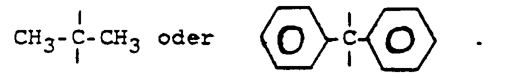 M² ist Silizium, Germanium oder Zinn, bevorzugt Silizium oder Germanium.

Die verbrückten Metallocene können nach folgendem bekannten Reaktionsschema hergestellt werden: 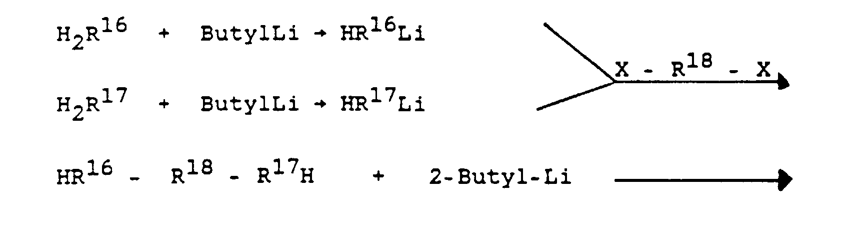 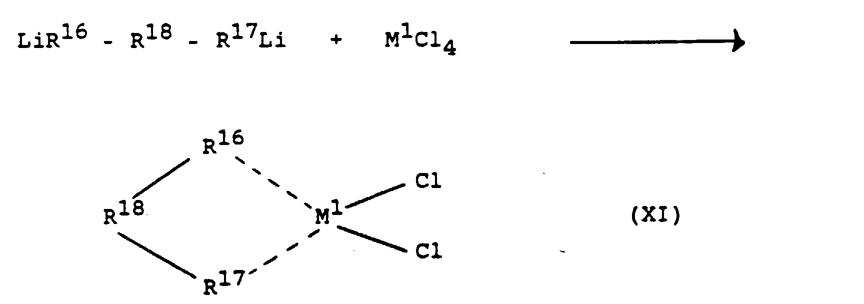 oder

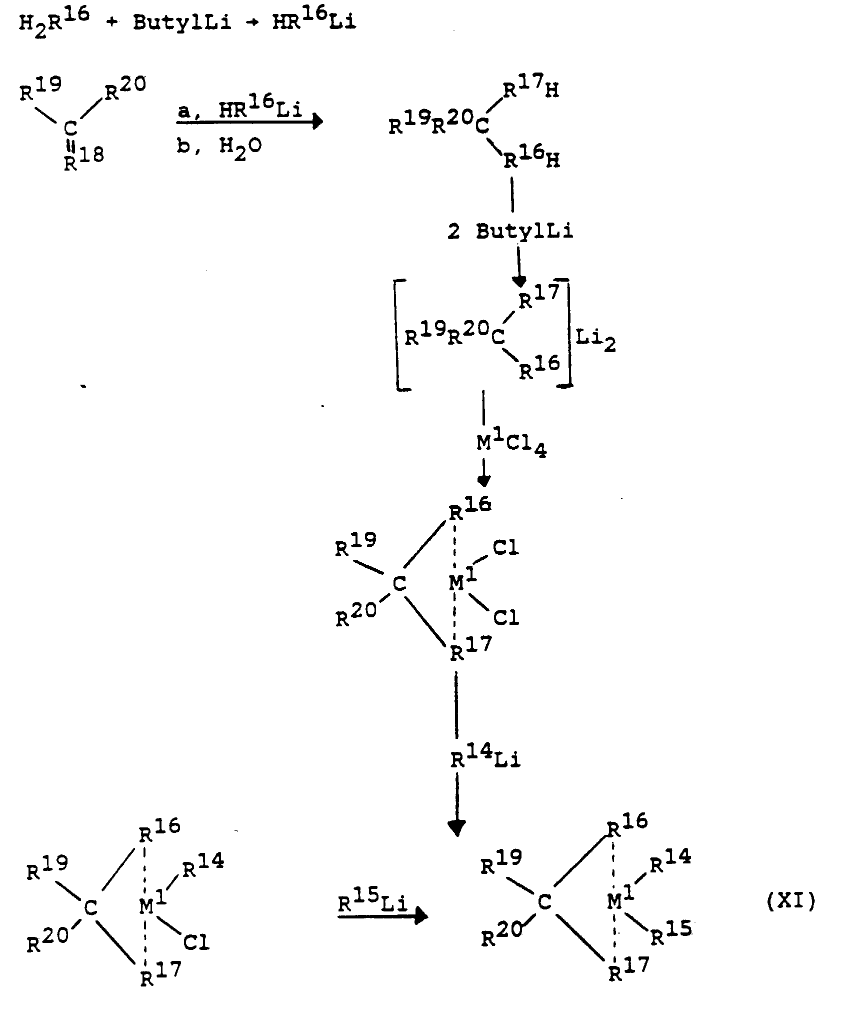

Das obige Reaktionsschema gilt auch für die Fälle R¹⁹ = R²⁰ und/oder R¹⁴ = R¹⁵ (vgl. Journal of Organometallic Chem. 288 (1985) 63-67 und EP-A 320 762).

Bevorzugt eingesetzte Metallocene sind:
Diphenylmethylen-(9-fluorenyl)-cyclopentadienylzirkondichlorid,
Isopropylen-(9-fluorenyl)-cyclopentadienyl-zirkondichlorid, Methyl(phenyl)methylen-(9-fluorenyl)-cyclopentadienyl-zirkondichlorid und
Diphenylmethylen-(9-fluorenyl)-cyclopentadienyl-hafniumdichlorid
oder deren Gemische.

Besonders bevorzugt ist:

Diphenylmethylen-(9-fluorenyl)-cyclopentadienyl-zirkondichlorid.

Der Cokatalysator ist ein Aluminoxan der Formel IX 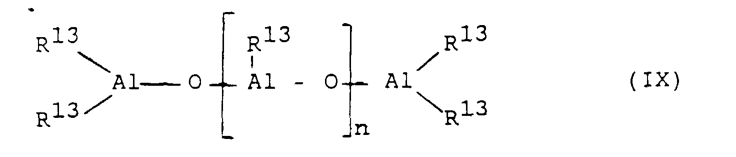 für den linearen Typ und/oder der Formel X 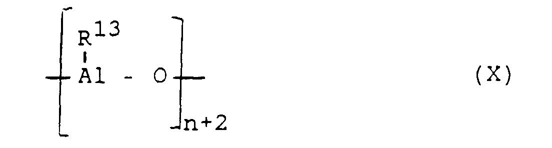 für den cyclischen Typ. In diesen Formeln bedeutet R¹³ eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden (vgl. S. Pasynkiewicz, Polyhedron 9 (1990) 429).

Bei einem der Verfahren wird fein gepulvertes Kupfersulfatpentahydrat in Toluol oder einem Cycloolefin (z.B. Cyclopenten, Norbornen, Tetracyclododecen) aufgeschlämmt und in einem Glaskolben unter Inertgas bei etwa -20°C oder knapp oberhalb des Schmelzpunktes des Cycloolefins mit soviel Aluminiumtrialkyl versetzt, daß für je 4 Al-Atome etwa 1 mol CuSO₄·5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol oder Cycloolefin gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxanen besteht darin, Aluminiumtrialkyl, vorzugsweise Aluminiumtrimethyl, in dem im Polymerisationsreaktor vorgelegten flüssigen Monomeren, in Heptan oder Toluol, zu lösen und dann die Aluminiumverbindung mit Wasser umzusetzen.

Es ist auch möglich, das Aluminoxan auf einen Träger aufzuziehen und es dann als Suspension in geträgerter Form einzusetzen. Mehrere Trägerungsverfahren sind bekannt. Z.B. kann leicht feuchtes Kieselgel als Träger wirken.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Falls eine Voraktivierung der Übergangsmetallverbindung notwendig ist, wird sie in Lösung vorgenommen. Bevorzugt wird dabei das Metallocen in einer Lösung des Aluminoxans in einem Kohlenwasserstoff aufgelöst. Als Kohlenwasserstoff eignet sich ein aliphatischer oder aromatischer Kohlenwasserstoff oder auch ein Cycloolefin wie beispielsweise Cyclopenten, Norbornen oder Tetracyclododecen.

Bevorzugt wird Toluol verwendet.

Die Voraktivierung kann auch in Suspensionen von geträgertem Aluminoxan vorgenommen werden.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 0 bis 60 Minuten. Man arbeitet bei einer Temperatur von 0 bis 70°C.

Falls dem Reaktionsgemisch eine geringe Menge an Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Polymerisation nach dem erfindungsgemäßen Verfahren bietet den Vorteil, eine hohe Raum-Zeit-Ausbeute (Reaktionsgeschwindigkeit) bei hohem Cycloolefineinbau zu erreichen. Es ist gefunden worden, daß durch eine Erhöhung der Konzentration des offenkettigen Olefins, z.B. durch Erhöhen des Partialdrucks dieses offenkettigen Olefins, die Reaktionsgeschwindigkeit deutlich gesteigert werden kann. Wenn reines offenkettiges Olefin beispielsweise Ethylen aufgedrückt wird, werden Drucke zwischen 0,01 und 64 bar eingesetzt, bevorzugt 2 bis 40 bar und besonders bevorzugt 4 bis 20 bar. Wird neben dem offenkettigen Olefin auch ein inertes Gas z.B. Stickstoff oder Argon aufgedrückt, so liegt der Gesamtdruck im Reaktionsgefäß bei 2 bis 64 bar, bevorzugt bei 5 bis 64 bar und besonders bevorzugt bei 6 bis 40 bar. Dadurch daß die cycloolefinische Komponente unverdünnt vorliegt wird auch bei hohen Drucken eine hohe Cycloolefineinbaurate erreicht. Die Reaktionsgeschwindigkeit kann außerdem auch durch die Erhöhung der Temperatur gesteigert werden, wobei der Temperaturbereich nach oben durch die thermische Beständigkeit des Katalysators und nach unten durch den Schmelzpunkt des Cycloolefins bei entsprechendem Druck begrenzt ist. Mit steigender Temperatur verringert sich aber gleichzeitig die Löslichkeit des gasförmigen Olefins im Reaktionsmedium und führt zu einer Erhöhung der Einbaurate des Cycloolefins im Copolymeren. Um bei steigender Temperatur konstante Einbauraten zu erhalten, muß entsprechend der Druck des offenkettigen und gasförmigen Olefins erhöht werden.

Besonders vorteilhaft sind kontinuierliche sowie mehrstufige Polymerisationsverfahren, weil sie einen rationalen Einsatz des Cycloolefins ermöglichen. Auch läßt sich bei kontinuierlichen Verfahren das polycyclische Olefin, welches als Restmonomer zusammen mit dem Polymeren anfallen kann, zurückgewinnen und wieder dem Reaktionsgemisch zuführen.

Hier bietet das erfindungsgemäße Verfahren gegenüber der Polymerisation in Lösung den Vorteil, daß wegen der Abwesenheit eines Lösungsmittels bzw. einer äußerst geringen Lösungsmittelkonzentration der technische Aufwand bei der Rückgewinnung der Cycloolefine aus dem Reaktionsgemisch oder aus einem Fällungsbad viel geringer ist.

Die Metallocenverbindung wird in einer Konzentration, bezogen auf das Übergangsmetall, von 10⁻³ bis 10⁻⁷, vorzugsweise 10⁻⁴ bis 10⁻⁶ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2 10⁻² mol pro dm³ Reaktorvolumen verwendet, bezogen auf den Gehalt an Aluminium. Prinzipiell sind aber auch höhere Konzentrationen möglich. Um die Polymerisationseigenschaften verschiedener Metallocene zu kombinieren, ist es möglich, Gemische mehrerer Metallocene einzusetzen.

Bei der Herstellung von Copolymerisaten kann die Variation der Molverhältnisse des polycyclischen Olefins zum (bevorzugt) eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 75 mol-% der cyclischen Komponenten und besonders bevorzugt werden Einbauraten zwischen 35 und 65 Mol.-% der cyclischen Komponenten.

Die mittlere Molmasse des gebildeten Copolymers läßt sich durch Wasserstoff-Dosierung, Variation der Katalysatorkonzentration oder Variation der Temperatur in bekannter Weise steuern.

Die Polydispersität M_{w}/Mₙ der Copolymeren ist mit Werten zwischen 2,0 - 3,5 recht eng. Dadurch resultiert ein Eigenschaftbild der Polymerisate, das diese für das Spritzgießen besonders geeignet macht.

Es ist überraschend gefunden worden, daß das erfindungsgemäße Masse-Verfahren bei gleichen Einbauraten und vergleichbaren Reaktionsgeschwindigkeiten zu höheren Molekulargewichten führt als die übliche Lösungspolymerisation.

Berücksichtigt man die Möglichkeiten der Variation des Molekulargewichts, so wird durch das erfindungsgemäße Verfahren der zugängliche Molekulargewichtsbereich bei den Cycloolefincopolymeren deutlich erweitert.

Die erfindungsgemäß bevorzugten Katalysatoren führen sowohl bei der "Lösungspolymerisation" wie auch bei der Massepolymerisation zu deutlich höheren Molekulargewichten als andere bisher bekannte Metallocenkatalysatoren.

Mit dem beschriebenen Verfahren lassen sich amorphe Copolymere herstellen. Die Copolymeren sind transparent und hart. Sie sind beispielsweise in Dekahydronaphthalin bei 135°C und in Toluol bei Raumtemperatur löslich. Die erfindungsgemäßen Polymeren sind thermoplastisch verarbeitbar. Sowohl beim Extrudieren als auch beim Spritzgießen wurde kein bemerkenswerter Abbau oder Viskositätsaufbau gefunden.

Überraschender Weise wurde gefunden, daß die mit dem erfindungsgemäßen Verfahren - und den erfindungsgemäß bevorzugten Metallocenen - hergestellten Cycloolefincopolymere in Lösung bei Raumtemperatur keine Vergelung zeigen. Daher eignen sie sich besonders für Beschichtungen, zur Herstellung von Gießfolien und für sonstige Anwendungen, bei denen Cycloolefinlösungen gelagert und transportiert werden müssen. Die Fließfähigkeit der entsprechenden Lösungen wirkt sich auch positiv auf die Aufarbeitung der Polymerlösungen nach der Polymerisation aus. Z.B. läßt sich die Lösung leichter filtrieren; eine Aufkonzentrierung in einem Dünnschichtverdampfer erfolgt mit niedrigerer thermischer und mechanischer Belastung der Polymerlösung.

Weiterhin wurde anhand von NMR-Spektren festgestellt, daß sich diese Cycloolefincopolymeren auch in ihrer Mikrostruktur deutlich von denen unterscheiden, die in Lösung eine Vergelung aufweisen. Dieser Unterschied könnte damit erklärt werden, daß die erfindungsgemäßen Katalysatoren wegen den unterschiedlichen Substituenten R¹⁶ und R¹⁷ streng syndiospezifisch polymerisieren. Nach heutigem Kenntnissstand ist anzunehmen, daß die erfindungsgemäßen Cycloolefincopolymere disyndiotaktische Cycloolefinsequenzen enthalten, die eine strukturelle Differenzierbarkeit nach NMR ermöglichen.

Die erfindungsgemäß hergestellten Materialien eignen sich besonders zur Herstellung von Extrusionsteilen wie Folien, Schläuchen, Rohren, Stangen und Fasern als auch zur Herstellung von Spritzgußartikeln beliebiger Form und Größe. Eine wichtige Eigenschaft der erfindungsgemäßen Materialien ist ihre Transparenz. Dadurch kommen besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

Die erfindungsgemäßen Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Die in den folgenden Beispielen angegebenen Glastemperaturen (Tg) wurden mittels DSC (Differential Scanning Calorimetry) bei einer Aufheizrate von 20°C/min bestimmt. Die angegebenen Viskositätszahlen wurden gemäß DIN 53 728 ermittelt.

### Beispiel 1

Ein sauberer und trockener 1,5-dm³-Polymerisationsreaktor mit Rührer wurde mit Stickstoff und dann mit Ethylen gespült und mit 560 g Norbornen-Schmelze bei 70°C gefüllt. Unter Rühren wurde dann der Reaktor auf einer Temperatur von 70°C gehalten und 6 bar Ethylen (Überdruck) aufgedrückt.

Danach wurden 5 cm³ toluolische Methylaluminoxanlösung (MAO-Lsg.), (10,1 Gew.-% Methylaluminoxan mit Molmasse 1300 g/mol nach kryoskopischer Bestimmung) in den Reaktor dosiert und die Mischung 15 min bei 70°C gerührt, wobei durch Nachdosieren der Ethylendruck bei 6 bar gehalten wurde. Parallel dazu wurden 10,2 mg Diphenylmethylen-(9-fluorenyl)-cyclopentadienyl-zirkoniumdichlorid in 5 cm³ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert (um das Molekulargewicht zu reduzieren, kann unmittelbar nach der Dosierung des Katalysators Wasserstoff über eine Schleuse dem Reaktionsgefäß zugeführt werden). Unter Rühren (750 UPM) wurde dann 0,5 Stunden bei 70°C polymerisiert, wobei der Ethylendruck durch Nachdosieren bei 6 bar gehalten wurde.

Dann wurde der Reaktorinhalt schnell in ein Rührgefäß abgelassen, in dem 100 cm³ Isopropanol vorgelegt waren. Die Mischung wurde in 2 dm³ Aceton eingetropft, 10 min gerührt und dann der suspendierte polymere Feststoff abfiltriert.

Das abfiltrierte Polymer wurde dann in 2 dm³ einer Mischung aus zwei Teilen 3-normaler Salzsäure und einem Teil Ethanol gegeben und diese Suspension 2 Stunden gerührt. Das Polymer wurde dann erneut abfiltriert, mit Wasser neutral gewaschen und bei 80°C und 0,2 bar 15 Stunden getrocknet. Es wurde eine Produktmenge von 40,4 g erhalten. An dem Produkt wurde eine Viskositätszahl (VZ) von 112 cm³/g und eine Glastemperatur (Tg) von 183°C gemessen.

### Beispiel 2 und 3

Die Polymerisationen wurden analog Beispiel 1 durchgeführt, wobei einige, in Tabelle 1 zusammengefaßte Bedingungen geändert wurden.

**Tabelle 1**

| Beispiel | Cycloolefin (g) | Metallocen | Menge Metallo. (mg) | Druck/ Ethylen (bar) | Zeit (h) | Ausbeute (g) | VZ (cm³/g) | Tg (°C) |
|---|---|---|---|---|---|---|---|---|
| 2 | Norbornen | B | 0,5 | 10 | 0,5 | 37 | 210 | 161,5 |
| 3 | DMON 400 | A | 10,0 | 6 | 0,3 | 31 | 135 | 206,9 |
| A = Diphenylmethylen-(9-fluorenyl)-cyclopentadienyl-zirkondichlorid B = Isopropylen-(9-fluorenyl)-cyclopentadienyl-zirkondichlorid DMON = Tetracyclododecen | | | | | | | | |

### Beispiel 4

Ein sauberer und trockener 75-dm³-Polymerisationsreaktor mit Rührer wurde mit Stickstoff und dann mit Ethylen gespült und mit 22 000 g Norbornenschmelze (Nb) gefüllt. Unter Rühren wurde dann der Reaktor auf eine Temperatur von 70°C gebracht und 15 bar Ethylen aufgedrückt.

Danach wurden 580 cm³ toluolische Methylaluminoxanlösung (10,1 Gew.-% Methylaluminoxan mit Molmasse 1 300 g/mol nach kryoskopischer Bestimmung) in den Reaktor dosiert und die Mischung 15 min bei 70°C gerührt, wobei durch Nachdosieren der Ethylendruck bei 15 bar gehalten wurde. Parallel dazu wurden 500 mg Metallocen A in 500 cm³ toluolischer Methylaluminoxanlösung (Konzentration und Qualität siehe oben) gelöst und durch 15 minütiges Stehenlassen voraktiviert. Dann wurde die Lösung des Komplexes (Kat. Lösung) in den Reaktor dosiert (um das Molekulargewicht zu reduzieren, kann unmittelbar nach der Dosierung des Katalysators Wasserstoff über eine Schleuse dem Reaktionsgefäß zugeführt werden). Unter Rühren (750 UPM) wurde dann 1,3 Stunden bei 70°C polymerisiert, wobei der Ethylendruck durch Nachdosieren bei 15 bar gehalten wurde. Dann wurde der Reaktorinhalt schnell in ein Rührgefäß abgelassen, in dem 200 cm³ Isopropanol (als Stopper) vorgelegt waren. Die Mischung wurde in Aceton ausgefällt, 10 min gerührt und dann der suspendierte polymere Feststoff abfiltriert.

Das abfiltrierte Polymer wurde dann mit einer Mischung aus zwei Teilen 3-normaler Salzsäure und einem Teil Ethanol versetzt und 2 Stunden gerührt. Das Polymer wurde dann erneut abfiltriert, mit Wasser neutral gewaschen und bei 80°C und 0,2 bar 15 Stunden getrocknet. Es wurde eine Produktmenge von 5500 g erhalten. An dem Produkt wurde eine Viskositätszahl (VZ) von 163 cm³/g und eine Glastemperatur (Tg) von 144°C gemessen.

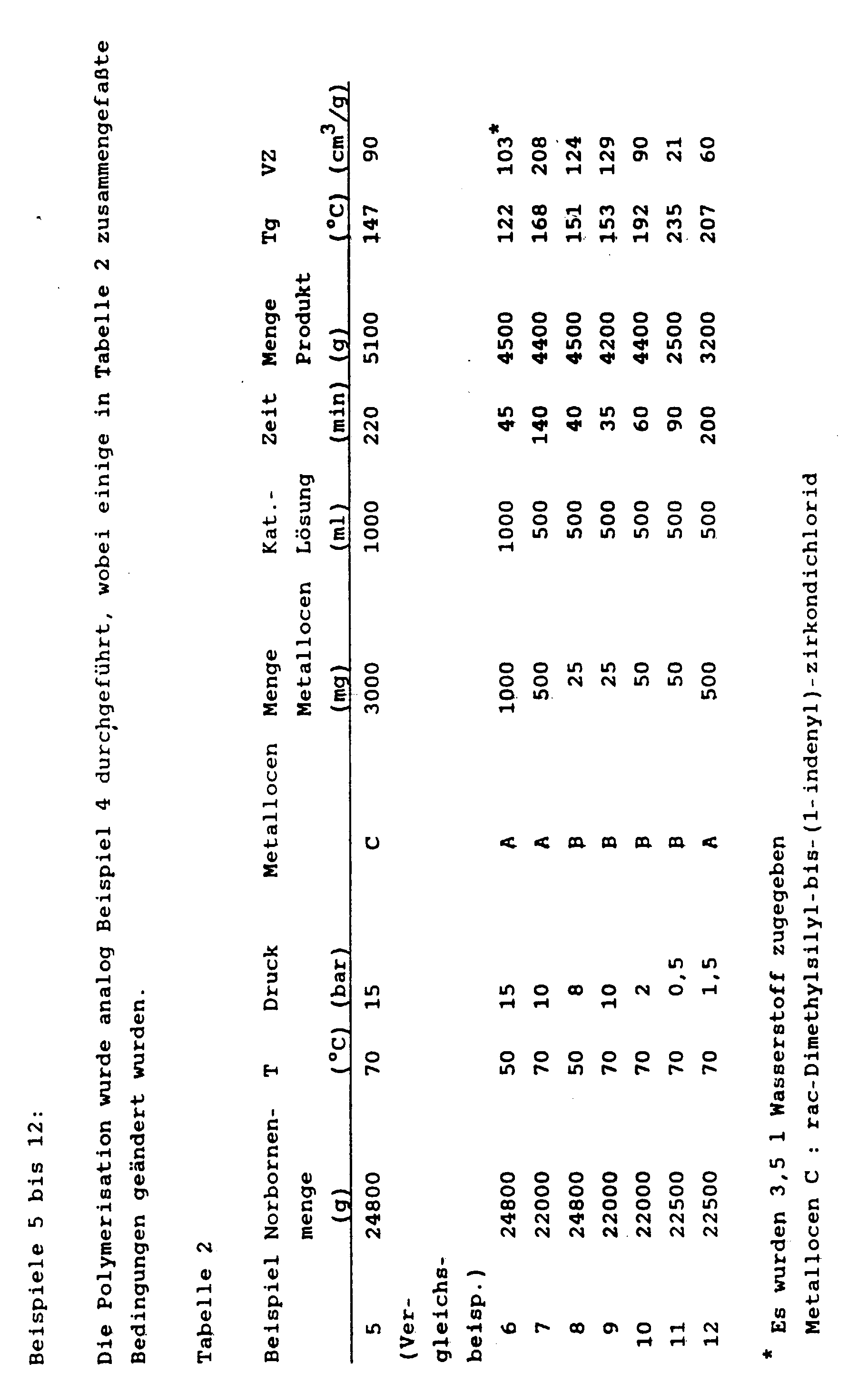

### Vergleichsbeispiel 13 (Lösungspolymerisation)

Ein sauberer und trockener 1,5-dm³-Polymerisationsreaktor mit Rührer wurde mit Stickstoff und dann mit Ethylen gespült und mit einer Lösung aus 411 g Norbornen (Nb) und 86 cm³ Toluol gefüllt. Unter Rühren wurde dann der Reaktor auf eine Temperatur von 70°C gebracht und 8 bar Ethylen aufgedrückt.

Danach wurden 20 cm³ toluolische Methylaluminoxanlösung (10,1 Gew.-% Methylaluminoxan mit Molmasse 1 300 g/mol nach kryoskopischer Bestimmung) in den Reaktor dosiert und die Mischung 15 min bei 70°C gerührt, wobei durch Nachdosieren der Ethylendruck bei 8 bar gehalten wurde. Parallel dazu wurden 71,8 mg Dicyclopentadienylzirkoniumdichlorid in 10 cm³ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann 2 Stunden bei 70°C polymerisiert, wobei der Ethylendruck durch Nachdosieren bei 8 bar gehalten wurde. Dann wurde der Reaktorinhalt schnell in ein Rührgefäß abgelassen, in dem 100 cm³ Isopropanol vorgelegt waren. Die Mischung wurde in 2 dm³ Aceton eingetropft, 10 min gerührt und dann der suspendierte polymere Eeststoff abfiltriert.

Das abfiltrierte Polymer wurde dann in 2 dm³ einer Mischung aus zwei Teilen 3-normaler Salzsäure und einem Teil Ethanol gegeben und diese Suspension 2 Stunden gerührt. Das Polymer wurde dann erneut abfiltriert, mit Wasser neutral gewaschen und bei 80°C und 0,2 bar 15 Stunden getrocknet. Es wurde eine Produktmenge von 73,5 g erhalten. An dem Produkt wurde eine Viskositätszahl (VZ) von 17 cm³/g und eine Glastemperatur (Tg) von 168,5°C gemessen.

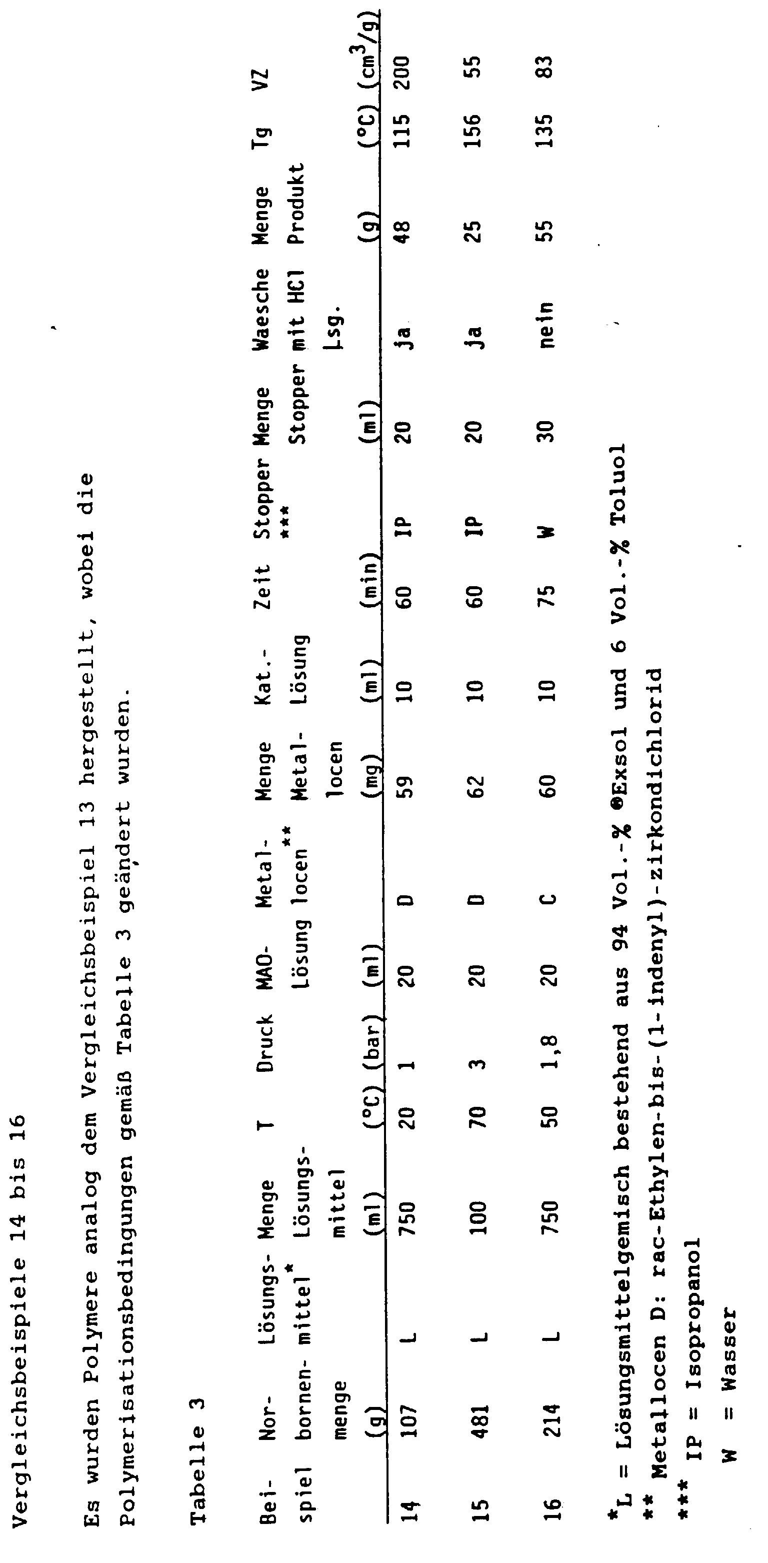

### Beispiel 17

Aus den Polymeren gemäß Beispielen 4 und 6 bis 9 wurden jeweils 20 Gew.-%ige Toluollösungen in 250-ml-Kolben bei 70°C hergestellt. Die Lösungen waren klar und fließfähig. Die Fließfähigkeit der Lösungen wurde durch Kippen der Kolben untersucht. Nach dem Abkühlen der Lösungen auf Raumtemperatur wurde die Fließfähigkeit zeitabhängig untersucht. Alle untersuchten Lösungen waren auch nach 50 Tagen fließfähig.

### Vergleichsbeispiel 18

Aus verschiedenen Polymeren, die gemäß den Vergleichsbeispielen 5 und 13 bis 16 hergestellt wurden, sind Lösungen analog Beispiel 17 hergestellt und untersucht worden. Alle Lösungen waren schon nach 8 Stunden bei Raumtemperatur nicht mehr fließfähig. Die Lösungen waren alle vergelt, d.h. bei dem Kipp-Experiment blieben sie formstabil.

### Beispiel 19

An verschiedenen Proben wurden GPC-Messungen (Gel-Permeation-Chromatography) durchgeführt. Es wurden ein Chromatograph vom Typ 150-C ALC/GPC Millipore Waters Chrom. und ein Säulensatz bestehend aus 4 Shodex-Säulen vom Typ AT-80 M/S verwendet. Das Lösungsmittel war o-Dichlorbenzol.

Weitere Parameter der Messung waren:

| | |
|---|---|
| Temperatur | 135°C |
| Durchfluß | 0,5 ml/min |
| Probenmenge | 0,4 ml Probenlösung |
| Konzentration der Probenlösung | 0,1 g/dl |
| Kalibrierung | nach Polyethylenstandard |

Die Ergebnisse der GPC-Messung sind folgende:

| Probe | Massenmittel M_{w} g/mol | Zahlenmittel Mₙ g/mol | M_{w}/Mₙ |
|---|---|---|---|
| gemäß Vergleichsbeisp. 5 | 75.600 | 37.200 | 2 |
| gemäß Beispiel 7 | 391.000 | 163.000 | 2,4 |

### Beispiel 20

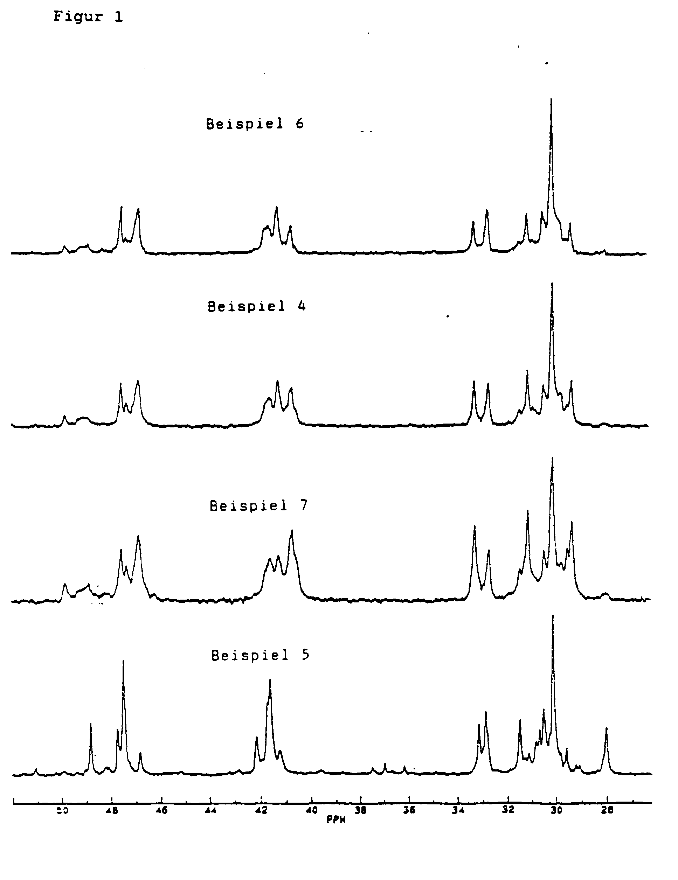

An Proben gemäß Beispielen 4 bis 7 wurden 13-C-NMR Spektren aufgenommen. Die Proben wurden in einem Gemisch aus Hexachlorbutadien und Tetrachlorethan-D2 gelöst und mit einem 400 MHz-NMR-Gerät vermessen. Die Spektren sind vergleichsweise in Figur 1 wiedergegeben.
Überraschenderweise ist zu erkennen, daß sich die Struktur der Polymere gemäß Beispielen 4, 6 und 7 deutlich von der gemäß Vergleichsbeispiel 5 unterscheidet.

Bei dem in Vergleichsbeispiel 5 verwendeten Metallocen C (rac-Dimethylsilyl-bis-(1-indenyl)-zirkondichlorid) sind die Substituenten R¹⁶ und R¹⁷ identisch.

### Beispiele 21 - 23

Die Polymerisationen wurden analog Beispiel 1 durchgeführt, wobei einige, in Tabelle 4 zusammengefaßte Bedingungen geändert wurden.

**Tabelle 4**

| Beispiel | Cycloolefin (g) | Metallocen | Menge Metallo. (mg) | Druck/ Ethylen (bar) | Zeit (h) | Ausbeute (g) | VZ (cm³/g) | Tg (°C) |
|---|---|---|---|---|---|---|---|---|
| 21 | Norbornen | E | 1 | 6 | 1 | 36 | 119 | 178 |
| 22 | Norbornen | F | 20 | 6 | 3 | 33 | 125 | 183 |
| 23 | Norbornen | G | 1 | 1,5 | 1 | 22 | 40 | 239 |
| E = Methyl(phenyl)methylen-(9-fluorenyl)-cyclopentadienyl-zirkondichlorid | | | | | | | | |
| F = Diphenylmethylen-(9-fluorenyl)-cyclopentadienyl-hafniumdichlorid | | | | | | | | |
| G = Isopropylen-(1-indenyl)-cyclopentadienyl-zirkondichlorid | | | | | | | | |

### Beispiel 24 (Polynorbornen)

In einem 1,5-dm³-Polymerisationsreaktor wurden 800 g Norbornen mit 25 cm³ 10,1 Gew.-%iger toluolischer Methylaluminoxanlösung unter Erwärmen verflüssigt (siehe Beispiel 1).

Parallel dazu wurden 250 mg Diphenylmethylen-(9-fluorenyl)-cyclopentadienylzirkondichlorid in 25 cm³ 10,1 %iger toluolischer Methylaluminoxanlösung gelöst und obiger Schmelze zugegeben. Unter Argon wurde 160 Stunden bei 35°C polymerisiert.

Die Aufarbeitung der Lösung erfolgt analog Beispiel 1. Nach Trocknung wurden 41 g eines farblosen Pulvers erhalten.
An dem Produkt wurde eine Viskositätszahl VZ von 44 cm³/g gemessen.
Mittels DSC konnte bis 380°C weder eine Glasstufe noch ein Schmelzpunkt detektiert werden.
Unter dem Heiztischmikroskop konnte bei ca. 400°C eine Erweichung beobachtet werden.

13 C-NMR-Spektren (analog Bsp. 20) zeigten sehr breite Signale mit Peakmaxima bei 31, 40 und 50 ppm. Das Produkt enthält nach NMR- und Infrarotspektren keine Doppelbindung.

### Beispiel 25

Vom Polymer aus Bsp. 24 wurden 10-20 %ige toluolische Lösungen hergestellt und auf Glasplatten mit Hilfe einer Rakel ausgestrichen. Nach Trocknung im Vakuum (0,2 bar) bei 80°C wurden transparente farblose Filme mit Dicken zwischen 1 bis 100 µm erhalten.

### Beschreibung für folgende Vertragsstaaten: AT, CH, LI, SE

Die Erfindung bezieht sich auf ein Verfahren zur Herstellung von Homo- und Copolymeren von polycyclischen Olefinen, wobei keine Ringöffnung erfolgt.

Es ist bekannt, daß polycyclische Olefine mittels verschiedener Ziegler-Katalysatoren polymerisiert werden können. Die Polymerisation verläuft in Abhängigkeit vom Katalysator über Ringöffnung (vgl. US 4 178 424) oder Öffnung der Doppelbindung (vgl. EP-A-156 464, EP-A-283 164).

Der Nachteil einer ringöffnenden Polymerisation besteht darin, daß das erhaltene Polymerisat Doppelbindungen enthält, die zu Kettenvernetzungen führen können und damit die Verarbeitbarkeit des Materials durch Extrudieren oder Spritzgießen erheblich einschränken.

Die Polymerisation unter Öffnung der Doppelbindung führt bei cyclischen Olefinen zu einer relativ niederen Polymerisationsgeschwindigkeit (Umsatzrate).

Eine gewisse Erhöhung der Reaktionsgeschwindigkeit wurde durch die Verwendung löslicher Metallocenverbindungen wie Bis-(cyclopentadienyl)-zirkoniumdichlorid erreicht (vgl. JP 61-221206).

Als Katalysator läßt sich bei cyclischen Olefinen eine stereorigide chirale Metallocenverbindung wie z.B. Ethylen-bis(indenyl)zirkoniumdichlorid (vgl. EP-A 283164) oder Dimethylsilyl-bis(indenyl)zirkoniumdichlorid (vgl. EP-A-407 870) verwenden, wobei die Polymerisation unter Erhalt des Ringes erfolgt.

Nach heutigem Stand der Technik werden die Homo- und Copolymerisation von Cycloolefinen in Gegenwart löslicher Metallocenkatalysatoren in Lösung durchgeführt, wobei als Lösungsmittel hauptsächlich Kohlenwasserstoffe eingesetzt werden.

Versuche haben gezeigt, daß bei den dem Stand der Technik entsprechenden Polymerisationsbedingungen in Lösung und bei relativ niedrigen Drucken, die in der Regel unter 10 bar liegen, die Raum-Zeit-Ausbeute (Reaktionsgeschwimdigkeit) mit zunehmender Konzentration des Cycloolefins im Reaktionsmedium abnimmt, d.h. auch mit zunehmender Einbaurate des Cycloolefins Beispiele entsprechender Cycloolefine sind Norbornen und Tetracyclododecen. Die geringe Raum-Zeit-Ausbeute bei einem hohen Cycloolefineinbau macht die Herstellung von Cycloolefincopolymeren mit hohem Cycloolefingehalt sehr aufwendig und wirtschaftlich ungünstig.

Dabei zeigen Cycloolefincopolymere mit einer hohen Einbaurate an Cycloolefin aufgrund ihrer hohen Glastemperatur eine sehr hohe thermische Formbeständigkeit. Sie sind daher interessante Werkstoffe, die als thermiplastische Formmassen oder in Form von Lösungen für Oberflächenbeschichtungen vorteilhaft einsetzbar sein sollten. Versuche haben jedoch gezeigt, daß solche Lösungen insbesondere wegen ihrer Neigung zur Vergelung nur bei hohen Temperaturen zu verarbeiten sind.

Aus EP-A-358 103 ist ein Verfahren zur Herstellung eines Polymers oder Copolymers bekannt. Das Verfahren umfaßt die Polymerisation einer ungesättigten Kohlenwasserstoffverbindung in Gegenwart eines Katalysators, der eine Übergangsmetallverbindung und eine Aluminoxanverbindung enthält.

Aus EP-A-407 870 sind Polymerisate von polycyclischen Olefinen mit einer Viskositätszahl größer 20 cm³/g und einer Glastemperatur oberhalb 100°C bekannt. Die Polymerisate erhält man ohne Ringöffnung mit einer hohen Polymerisationsgeschwindigkeit bei technisch günstigen Polymerisationstemperaturen mittels eines Katalysators, welcher aus einer stereorigiden Metallocenverbindung der Gruppen IVb bis Vlb des Periodensystems der Elemente und einem Aluminoxan besteht.

Aus DE-A-38 35 044 sind Mono- und Copolymerisate von polycyclischen Olefinen bekannt. Die Mono- und Copolymerisate werden ohne Ringöffnung mit einer hohen Polymerisationsgeschwindigkeit bei günstigen Polymerisationstemperaturen mittels eines Katalysators erhalten, welcher aus einer stereorigiden chiralen Metallocenverbindung der Gruppen IVb bis Vlb des Periodensystems der Elemente und einem Aluminoxan besteht.

Es bestand daher die Aufgabe, ein Verfahren zur Herstellung von Cycloolefinhomo- und -copolymeren zu finden, das, basierend auf der Polymerisation über die Doppelbindung, bei hoher Raum-Zeit-Ausbeute Copolymere mit einer hohen Cycloolefineinbaurate liefert, welche in Lösung bei Raumtemperatur nicht vergelen.

Es wurde gefunden, daß durch die Wahl bestimmter Reaktionsbedingungen und bei Verwendung bestimmter Metallocenkatalysatoren diese Aufgabe gelöst werden kann. Wichtig ist dabei, daß die Polymerisation in dem flüssigen Cycloolefin selbst oder in äußerst konzentrierten Cycloolefinlösungen durchgeführt wird, wobei zweckmäßigerweise die Temperatur oberhalb Raumtemperatur und der Druck oberhalb 1 bar liegt.

Die Erfindung betrifft somit ein Verfahren zur Herstellung eines Cycloolefinpolymers oder -copolymers durch Polymerisation von 0,1 bis 100 Gew.-%, bezogen auf die Gesamtmenge der Monomeren, mindestens eines Monomers der Formeln I, II, III, IV, V oder VI 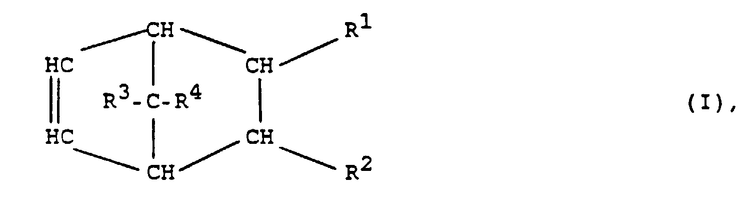 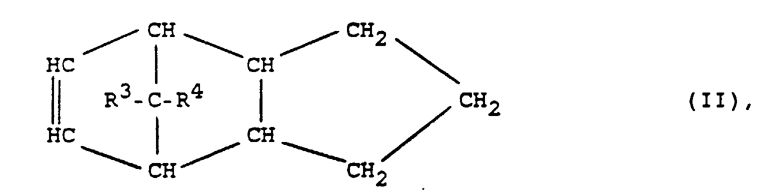 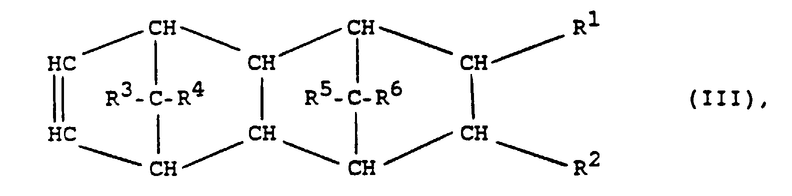 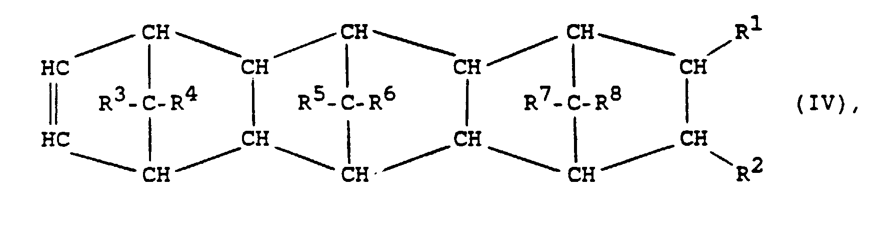 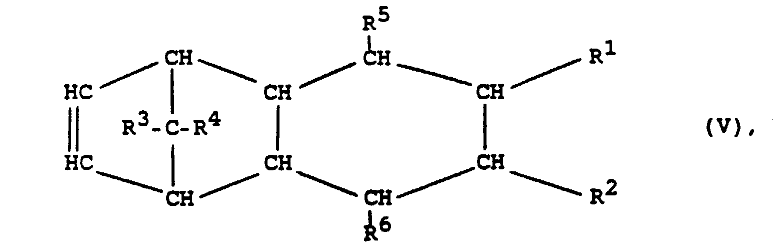 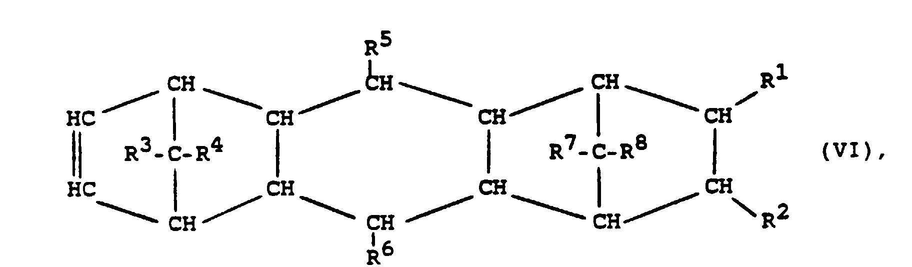 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können,
0 bis 99,9 Gew.-%, bezogen auf die Gesamtmenge der Monomeren, eines Cycloolefins der Formel VII 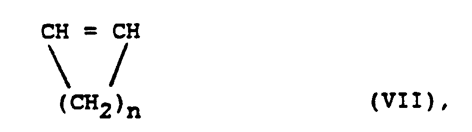 worin n eine Zahl von 2 bis 10 ist, und
0 bis 99,9 Gew.-%, bezogen auf die Gesamtmenge der Monomeren, mindestens eines acyclischen 1-Olefins der Formel VIII 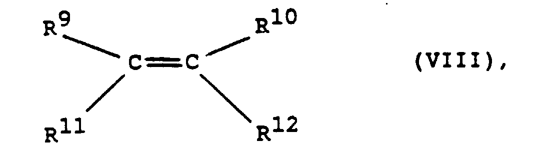 worin R⁹, R¹⁰, R¹¹ und R¹² gleich oder verschieden sind und ein Wasserstoffatom oder einen C₁-C₈-Alkylrest bedeuten, bei Temperaturen von 20 bis 150°C und einem Druck von 0,01 bis 64 bar, in Gegenwart eines Katalysators, welcher aus einem Aluminoxan der Formel IX 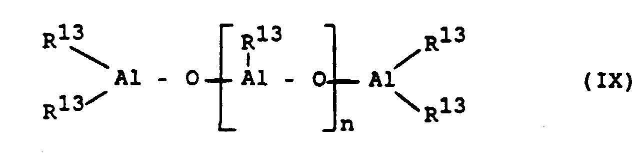 für den linearen Typ und/oder der Formel X 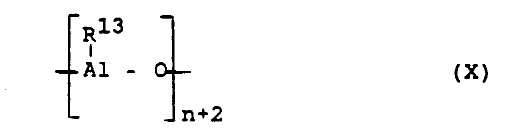 für den cyclischen Typ, wobei in den Formeln IX und X R¹³ eine C₁-C₆-Alkylgruppe oder Phenyl oder Benzyl bedeutet und n eine ganze Zahl von 2 bis 50 ist, und einem Metallocen der Formel XI 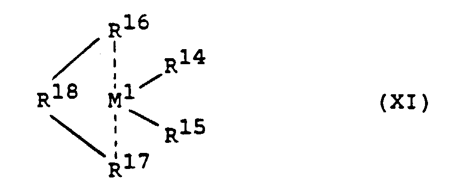 besteht, worin
- M¹: Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- R¹⁶ und R¹⁷: einen ein- oder mehrkernigen Kohlenwasserstoffrest, welcher mit dem Zentralatom M¹ eine Sandwichstruktur bilden kann,
bedeuten,
- R¹⁸: 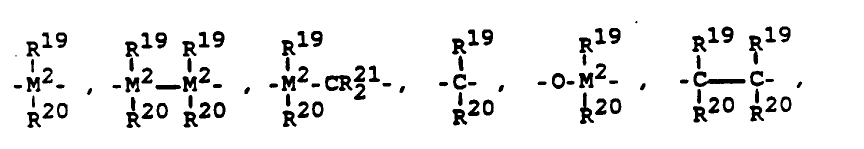 = BR¹⁹, = AlR¹⁹, -Ge-, -Sn-, -O-, -S-,= SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylqruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
- M²: Silizium, Germanium oder Zinn ist, dadurch gekennzeichnet, daß die Polymerisation in dem flüssigen Cycloolefinmonomer oder Cycloolefinmonomergemisch oder in einer mindestens 95-volumenprozentigen Cycloolefinlösung durchgeführt wird und in der Formel XI die Substituenten R¹⁶ und R¹⁷ verschieden sind.

Bevorzugt wird im flüssigen Cycloolefinmonomer oder Cycloolefinmonomergemisch polymerisiert.

Im erfindungsgemäßen Verfahren wird mindestens ein polycyclisches Olefin der Formeln I, II, III, IV, V oder VI vorzugsweise ein Cycloolefin der Formeln I oder III, worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, polymerisiert.
Gegebenenfalls wird auch ein monocyclisches Olefin der Formel VII 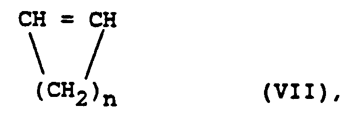 worin n eine Zahl von 2 bis 10 ist, verwendet. Ein anderes Comonomer ist ein acyclisches 1-Olefin der Formel VIII, 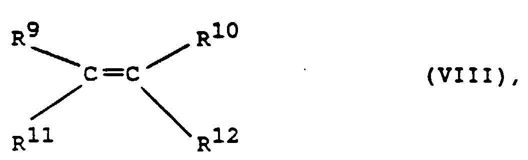 worin R⁹, R¹⁰, R¹¹ und R¹² gleich oder verschieden sind und ein Wasserstoffatom oder einen C₁-C₈-Alkylrest bedeuten. Bevorzugt sind Ethylen oder Propylen.

Insbesondere werden Copolymere von polycyclischen Olefinen, vorzugsweise der Formeln I und III mit den acyclischen Olefinen VIII hergestellt.

Besonders bevorzugte Cycloolefine sind Norbornen und Tetracyclododecen, wobei diese durch (C₁-C₆)-Alkyl substituiert sein können. Sie werden vorzugsweise mit Ethylen copolymerisiert; besondere Bedeutung besitzen Ethylen/Norbornen-Copolymere.

Das polycyclische Olefin (I bis VI) wird in einer Menge von 0,1 bis 100 Gew.-% und das monocyclische Olefin (VII) in einer Menge von 0 bis 99,9 Gew.-% jeweils bezogen auf die Gesamtmenge der Monomeren, eingesetzt.

Die Konzentration des offenkettigen Olefins ergibt sich aus der Löslichkeit des offenkettigen Olefins in dem Reaktionsmedium bei gegebenem Druck und gegebener Temperatur.

Als polycyclische Olefine, monocyclische Olefine und offenkettige Olefine sind auch Gemische zweier oder mehrerer Olefine des jeweiligen Typs zu verstehen. Das heißt, es können neben polycyclischen Homopolymeren und Bicopolymeren auch Ter- und Multicopolymere nach dem erfindungsgemäßen Verfahren hergestellt werden. Auch Copolymere der Cycloolefine VII mit den acyclischen Olefinen VIII lassen sich vorteilhaft nach dem beschriebenen Verfahren erhalten. Von den Cycloolefinen VII ist Cyclopenten, das substituiert sein kann, bevorzugt.

Der für das erfindungsgemäße Verfahren zu verwendende Katalysator besteht aus einem Aluminiumoxan und mindestens einem Metallocen (Übergangsmetallkomponente) der Formel XI 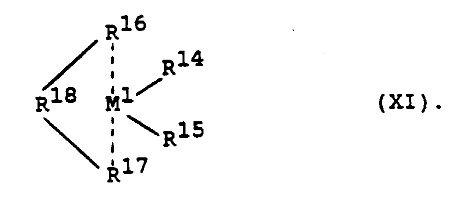 In Formel XI ist M¹ ein Metall aus der Gruppe Titan, Zirkon, Hafnium, Vanadium, Niob und Tantal, vorzugsweise Zirkon und Hafnium. Besonders bevorzugt wird Zirkon verwendet.

R¹⁴ und R¹⁵ sind gleich oder verschieden und bedeuten ein Wasserstoffatom, eine C₁-C₁₀- , vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R¹⁶ und R¹⁷ sind verschieden und bedeuten einen ein- oder mehrkernigen Kohlenwasserstoffrest, welcher mit dem Zentralatom M¹ eine Sandwichstruktur bilden kann. Bevorzugt sind R¹⁶ Fluorenyl und R¹⁷ Cyclopentadienyl.

R¹⁸ ist eine ein- oder mehrgliedrige Brücke, welche die Reste R¹⁶ und R¹⁷ verknüpft und bedeutet vorzugsweise 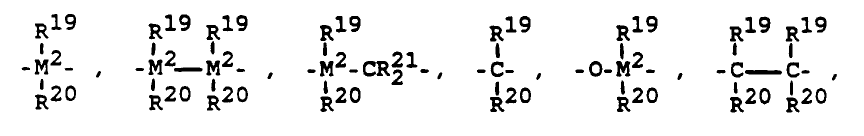 = BR¹⁹ = AlR¹⁹, -Ge-, -Sn-, -O-, -S-,= SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₆-C₄₀-Arylalkenylgruppe oder eine C₇-C₄₀-Alkylarylgruppe bedeuten, oder R¹⁹ und R²⁰ oder R¹⁹ und R²¹ bilden jeweils zusammen mit den sie verbindenden Atomen einen Ring.

Bevorzugt ist R¹⁸ ein Rest 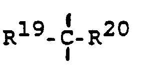 und besonders bevorzugt 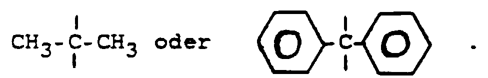 M² ist Silizium, Germanium oder Zinn, bevorzugt Silizium oder Germanium.

Die verbrückten Metallocene können nach folgendem bekannten Reaktionsschema hergestellt werden: 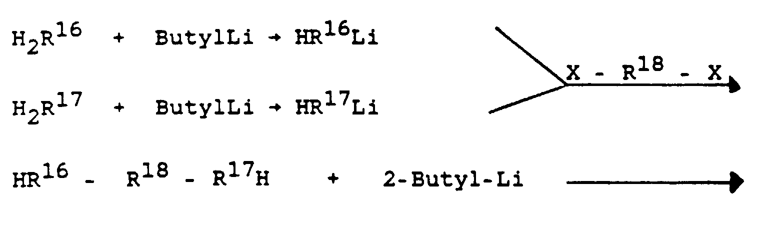 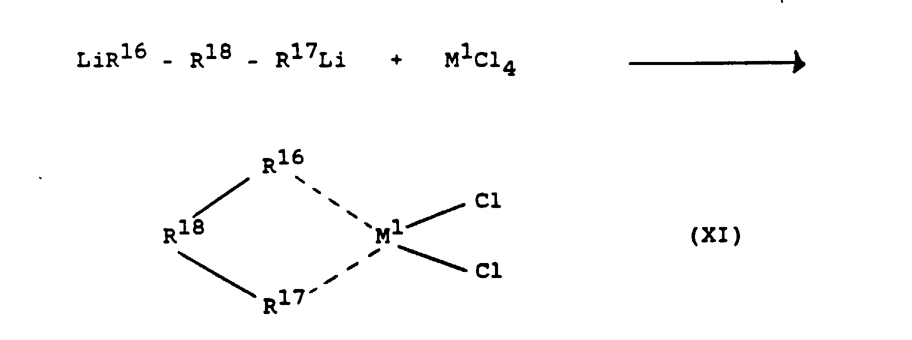 oder

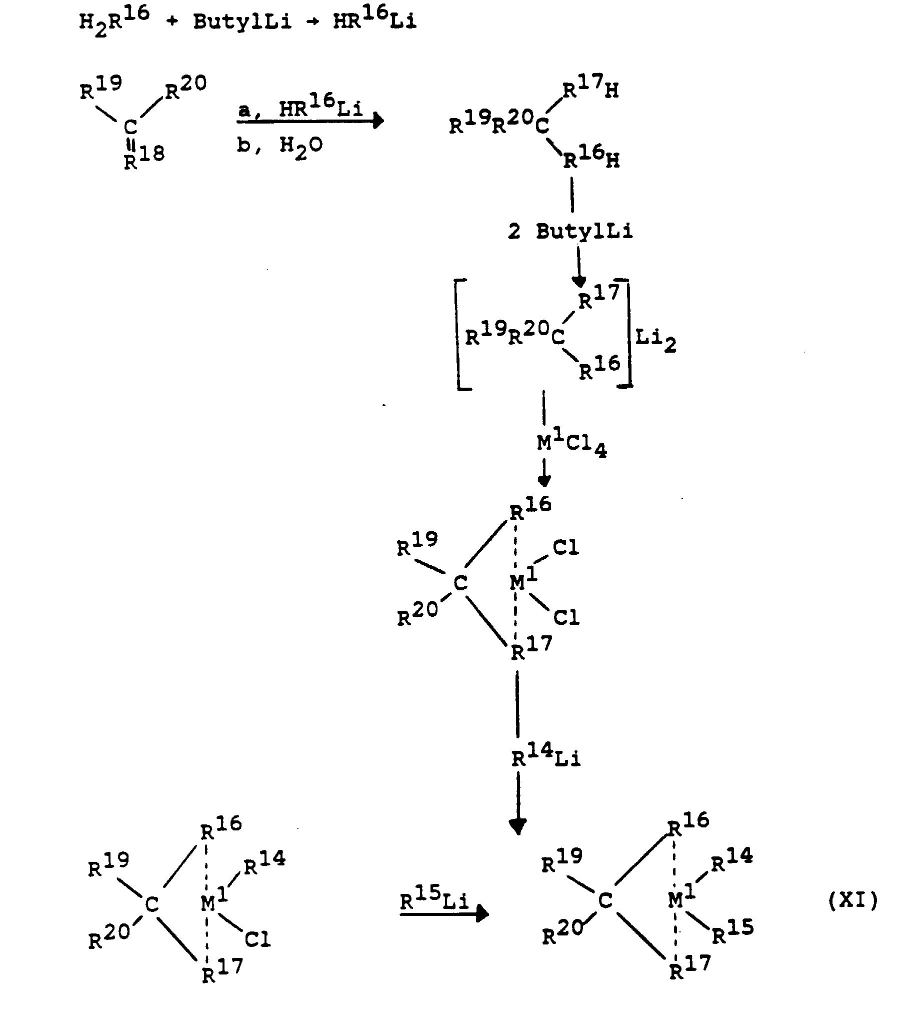

Das obige Reaktionsschema gilt auch für die Fälle R¹⁹ = R²⁰ und/oder R¹⁴ = R¹⁵ (vgl. Journal of Organometallic Chem. 288 (1985) 63-67 und EP-A 320 762).

Bevorzugt eingesetzte Metallocene sind:
Diphenylmethylen-(9-fluorenyl)-cyclopentadienyl-zirkondichlorid,
Isopropylen-(9-fluorenyl)-cyclopentadienyl-zirkondichlorid, Methyl(phenyl)methylen-(9-fluorenyl)-cyclopentadienyl-zirkondichlorid und
Diphenylmethylen-(9-fluorenyl)-cyclopentadienyl-hafniumdichlorid
oder deren Gemische.

Besonders bevorzugt ist:

Diphenylmethylen-(9-fluorenyl)-cyclopentadienyl-zirkondichlorid.

Der Cokatalysator ist ein Aluminoxan der Formel IX 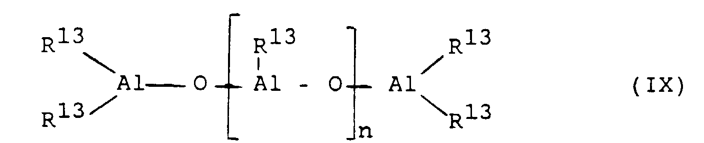 für den linearen Typ und/oder der Formel X 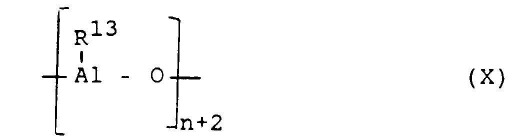 für den cyclischen Typ. In diesen Formeln bedeutet R¹³ eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden (vgl. S. Pasynkiewicz, Polyhedron 9 (1990) 429).

Bei einem der Verfahren wird fein gepulvertes Kupfersulfatpentahydrat in Toluol oder einem Cycloolefin (z.B. Cyclopenten, Norbornen, Tetracyclododecen) aufgeschlämmt und in einem Glaskolben unter Inertgas bei etwa -20°C oder knapp oberhalb des Schmelzpunktes des Cycloolefins mit soviel Aluminiumtrialkyl versetzt, daß für je 4 Al-Atome etwa 1 mol CuSO₄·5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol oder Cycloolefin gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxanen besteht darin, Aluminiumtrialkyl, vorzugsweise Aluminiumtrimethyl, in dem im Polymerisationsreaktor vorgelegten flüssigen Monomeren, in Heptan oder Toluol, zu lösen und dann die Aluminiumverbindung mit Wasser umzusetzen.

Es ist auch möglich, das Aluminoxan auf einen Träger aufzuziehen und es dann als Suspension in geträgerter Form einzusetzen. Mehrere Trägerungsverfahren sind bekannt. Z.B. kann leicht feuchtes Kieselgel als Träger wirken.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Falls eine Voraktivierung der Übergangsmetallverbindung notwendig ist, wird sie in Lösung vorgenommen. Bevorzugt wird dabei das Metallocen in einer Lösung des Aluminoxans in einem Kohlenwasserstoff aufgelöst. Als Kohlenwasserstoff eignet sich ein aliphatischer oder aromatischer Kohlenwasserstoff oder auch ein Cycloolefin wie beispielsweise Cyclopenten, Norbornen oder Tetracyclododecen.

Bevorzugt wird Toluol verwendet.

Die Voraktivierung kann auch in Suspensionen von geträgertem Aluminoxan vorgenommen werden.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 0 bis 60 Minuten. Man arbeitet bei einer Temperatur von 0 bis 70°C.

Falls dem Reaktionsgemisch eine geringe Menge an Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Polymerisation nach dem erfindungsgemäßen Verfahren bietet den Vorteil, eine hohe Raum-Zeit-Ausbeute (Reaktionsgeschwindigkeit) bei hohem Cycloolefineinbau zu erreichen. Es ist gefunden worden, daß durch eine Erhöhung der Konzentration des offenkettigen Olefins, z.B. durch Erhöhen des Partialdrucks dieses offenkettigen Olefins, die Reaktionsgeschwindigkeit deutlich gesteigert werden kann. Wenn reines offenkettiges Olefin beispielsweise Ethylen aufgedrückt wird, werden Drucke zwischen 0,01 und 64 bar eingesetzt, bevorzugt 2 bis 40 bar und besonders bevorzugt 4 bis 20 bar. Wird neben dem offenkettigen Olefin auch ein inertes Gas z.B. Stickstoff oder Argon aufgedrückt, so liegt der Gesamtdruck im Reaktionsgefäß bei 2 bis 64 bar, bevorzugt bei 5 bis 64 bar und besonders bevorzugt bei 6 bis 40 bar. Dadurch daß die cycloolefinische Komponente unverdünnt vorliegt wird auch bei hohen Drucken eine hohe Cycloolefineinbaurate erreicht. Die Reaktionsgeschwindigkeit kann außerdem auch durch die Erhöhung der Temperatur gesteigert werden, wobei der Temperaturbereich nach oben durch die thermische Beständigkeit des Katalysators und nach unten durch den Schmelzpunkt des Cycloolefins bei entsprechendem Druck begrenzt ist. Mit steigender Temperatur verringert sich aber gleichzeitig die Löslichkeit des gasförmigen Olefins im Reaktionsmedium und führt zu einer Erhöhung der Einbaurate des Cycloolefins im Copolymeren. Um bei steigender Temperatur konstante Einbauraten zu erhalten, muß entsprechend der Druck des offenkettigen und gasförmigen Olefins erhöht werden.

Besonders vorteilhaft sind kontinuierliche sowie mehrstufige Polymerisationsverfahren, weil sie einen rationalen Einsatz des Cycloolefins ermöglichen. Auch läßt sich bei kontinuierlichen Verfahren das polycyclische Olefin, welches als Restmonomer zusammen mit dem Polymeren anfallen kann, zurückgewinnen und wieder dem Reaktionsgemisch zuführen.

Hier bietet das erfindungsgemäße Verfahren gegenüber der Polymerisation in Lösung den Vorteil, daß wegen der Abwesenheit eines Lösungsmittels bzw. einer äußerst geringen Lösungsmittelkonzentration der technische Aufwand bei der Rückgewinnung der Cycloolefine aus dem Reaktionsgemisch oder aus einem Fällungsbad viel geringer ist.

Die Metallocenverbindung wird in einer Konzentration, bezogen auf das Übergangsmetall, von 10⁻³ bis 10⁻⁷, vorzugsweise 10⁻⁴ bis 10⁻⁶ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2 10⁻² mol pro dm³ Reaktorvolumen verwendet, bezogen auf den Gehalt an Aluminium. Prinzipiell sind aber auch höhere Konzentrationen möglich. Um die Polymerisationseigenschaften verschiedener Metallocene zu kombinieren, ist es möglich, Gemische mehrerer Metallocene einzusetzen.

Bei der Herstellung von Copolymerisaten kann die Variation der Molverhältnisse des polycyclischen Olefins zum (bevorzugt) eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 75 mol-% der cyclischen Komponenten und besonders bevorzugt werden Einbauraten zwischen 35 und 65 Mol.-% der cyclischen Komponenten.

Die mittlere Molmasse des gebildeten Copolymers läßt sich durch Wasserstoff-Dosierung, Variation der Katalysatorkonzentration oder Variation der Temperatur in bekannter Weise steuern.

Die Polydispersität M_{w}/Mₙ der Copolymeren ist mit Werten zwischen 2,0 - 3,5 recht eng. Dadurch resultiert ein Eigenschaftbild der Polymerisate, das diese für das Spritzgießen besonders geeignet macht.

Es ist überraschend gefunden worden, daß das erfindungsgemäße Masse-Verfahren bei gleichen Einbauraten und vergleichbaren Reaktionsgeschwindigkeiten zu höheren Molekulargewichten führt als die übliche Lösungspolymerisation.

Berücksichtigt man die Möglichkeiten der Variation des Molekulargewichts, so wird durch das erfindungsgemäße Verfahren der zugängliche Molekulargewichtsbereich bei den Cycloolefincopolymeren deutlich erweitert.

Die erfindungsgemäß bevorzugten Katalysatoren führen sowohl bei der Lösungspolymerisation wie auch bei der Massepolymerisation zu deutlich höheren Molekulargewichten als andere bisher bekannte Metallocenkatalysatoren.

Mit dem beschriebenen Verfahren lassen sich amorphe Copolymere herstellen. Die Copolymeren sind transparent und hart. Sie sind beispielsweise in Dekahydronaphthalin bei 135°C und in Toluol bei Raumtemperatur löslich. Die erfindungsgemäßen Polymeren sind thermoplastisch verarbeitbar. Sowohl beim Extrudieren als auch beim Spritzgießen wurde kein bemerkenswerter Abbau oder Viskositätsaufbau gefunden.

Überraschender Weise wurde gefunden, daß die mit dem erfindungsgemäßen Verfahren - und den erfindungsgemäß bevorzugten Metallocenen - hergestellten Cycloolefincopolymere in Lösung bei Raumtemperatur keine Vergelung zeigen. Daher eignen sie sich besonders für Beschichtungen, zur Herstellung von Gießfolien und für sonstige Anwendungen, bei denen Cycloolefinlösungen gelagert und transportiert werden müssen. Die Fließfähigkeit der entsprechenden Lösungen wirkt sich auch positiv auf die Aufarbeitung der Polymerlösungen nach der Polymerisation aus. Z.B. läßt sich die Lösung leichter filtrieren; eine Aufkonzentrierung in einem Dünnschichtverdampfer erfolgt mit niedrigerer thermischer und mechanischer Belastung der Polymerlösung.

Weiterhin wurde anhand von NMR-Spektren festgestellt, daß sich diese Cycloolefincopolymeren auch in ihrer Mikrostruktur deutlich von denen unterscheiden, die in Lösung eine Vergelung aufweisen. Dieser Unterschied könnte damit erklärt werden, daß die erfindungsgemäßen Katalysatoren wegen den unterschiedlichen Substituenten R¹⁶ und R¹⁷ streng syndiospezifisch polymerisieren. Nach heutigem Kenntnissstand ist anzunehmen, daß die erfindungsgemäßen Cycloolefincopolymere disyndiotaktische Cycloolefinsequenzen enthalten, die eine strukturelle Differenzierbarkeit nach NMR ermöglichen.

Die erfindungsgemäß hergestellten Materialien eignen sich besonders zur Herstellung von Extrusionsteilen wie Folien, Schläuchen, Rohren, Stangen und Fasern als auch zur Herstellung von Spritzgußartikeln beliebiger Form und Größe. Eine wichtige Eigenschaft der erfindungsgemäßen Materialien ist ihre Transparenz. Dadurch kommen besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

Die erfindungsgemäßen Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenachaftskombination der Komponenten auf. Für Legierungen mit den erfindungsgemäßen Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Die in den folgenden Beispielen angegebenen Glastemperaturen (Tg) wurden mittels DSC (Differential Scanning Calorimetry) bei einer Aufheizrate von 20°C/min bestimmt. Die angegebenen Viskositätszahlen wurden gemäß DIN 53 728 ermittelt.

### Beispiel 1

Ein sauberer und trockener 1,5-dm³-Polymerisationsreaktor mit Rührer wurde mit Stickstoff und dann mit Ethylen gespült und mit 560 g Norbornen-Schmelze bei 70°C gefüllt. Unter Rühren wurde dann der Reaktor auf einer Temperatur von 70°C gehalten und 6 bar Ethylen (Überdruck) aufgedrückt.

Danach wurden 5 cm³ toluolische Methylaluminoxanlösung (MAO-Lsg.), (10,1 Gew.-% Methylaluminoxan mit Molmasse 1300 g/mol nach kryoskopischer Bestimmung) in den Reaktor dosiert und die Mischung 15 min bei 70°C gerührt, wobei durch Nachdosieren der Ethylendruck bei 6 bar gehalten wurde. Parallel dazu wurden 10,2 mg Diphenylmethylen-(9-fluorenyl)-cyclopentadienyl-zirkoniumdichlorid in 5 cm³ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert (um das Molekulargewicht zu reduzieren, kann unmittelbar nach der Dosierung des Katalysators Wasserstoff über eine Schleuse dem Reaktionsgefäß zugeführt werden). Unter Rühren (750 UPM) wurde dann 0,5 Stunden bei 70°C polymerisiert, wobei der Ethylendruck durch Nachdosieren bei 6 bar gehalten wurde.

Dann wurde der Reaktorinhalt schnell in ein Rührgefäß abgelassen, in dem 100 cm³ Isopropanol vorgelegt waren. Die Mischung wurde in 2 dm³ Aceton eingetropft, 10 min gerührt und dann der suspendierte polymere Feststoff abfiltriert.

Das abfiltrierte Polymer wurde dann in 2 dm³ einer Mischung aus zwei Teilen 3-normaler Salzsäure und einem Teil Ethanol gegeben und diese Suspension 2 Stunden gerührt. Das Polymer wurde dann erneut abfiltriert, mit Wasser neutral gewaschen und bei 80°C und 0,2 bar 15 Stunden getrocknet. Es wurde eine Produktmenge von 40,4 g erhalten. An dem Produkt wurde eine Viskositätszahl (VZ) von 112 cm³/g und eine Glastemperatur (Tg) von 183°C gemessen.

### Beispiel 2 und 3

Die Polymerisationen wurden analog Beispiel 1 durchgeführt, wobei einige, in Tabelle 1 zusammengefaßte Bedingungen geändert wurden.

**Tabelle 1**

| Beispiel | Cycloolefin (g) | Metallocen | Menge Metallo. (mg) | Druck/ Ethylen (bar) | Zeit (h) | Ausbeute (g) | VZ (cm³/g) | Tg (°C) |
|---|---|---|---|---|---|---|---|---|
| 2 | Norbornen | B | 0,5 | 10 | 0,5 | 37 | 210 | 161,5 |
| 3 | DMON 400 | A | 10,0 | 6 | 0,3 | 31 | 135 | 206,9 |
| A = Diphenylmethylen-(9-fluorenyl)-cyclopentadienyl-zirkondichlorid B = Isopropylen-(9-fluorenyl)-cyclopentadienyl-zirkondichlorid DMON = Tetracyclododecen | | | | | | | | |

### Beispiel 4

Ein sauberer und trockener 75-dm³-Polymerisationsreaktor mit Rührer wurde mit Stickstoff und dann mit Ethylen gespült und mit 22 000 g Norbornenschmelze (Nb) gefüllt. Unter Rühren wurde dann der Reaktor auf eine Temperatur von 70°C gebracht und 15 bar Ethylen aufgedrückt.

Danach wurden 580 cm³ toluolische Methylaluminoxanlösung (10,1 Gew.-% Methylaluminoxan mit Molmasse 1 300 g/mol nach kryoskopischer Bestimmung) in den Reaktor dosiert und die Mischung 15 min bei 70°C gerührt, wobei durch Nachdosieren der Ethylendruck bei 15 bar gehalten wurde. Parallel dazu wurden 500 mg Metallocen A in 500 cm³ toluolischer Methylaluminoxanlösung (Konzentration und Qualität siehe oben) gelöst und durch 15 minütiges Stehenlassen voraktiviert. Dann wurde die Lösung des Komplexes (Kat. Lösung) in den Reaktor dosiert (um das Molekulargewicht zu reduzieren, kann unmittelbar nach der Dosierung des Katalysators Wasserstoff über eine Schleuse dem Reaktionsgefäß zugeführt werden). Unter Rühren (750 UPM) wurde dann 1,3 Stunden bei 70°C polymerisiert, wobei der Ethylendruck durch Nachdosieren bei 15 bar gehalten wurde. Dann wurde der Reaktorinhalt schnell in ein Rührgefäß abgelassen, in dem 200 cm³ Isopropanol (als Stopper) vorgelegt waren. Die Mischung wurde in Aceton ausgefällt, 10 min gerührt und dann der suspendierte polymere Feststoff abfiltriert.

Das abfiltrierte Polymer wurde dann mit einer Mischung aus zwei Teilen 3-normaler Salzsäure und einem Teil Ethanol versetzt und 2 Stunden gerührt. Das Polymer wurde dann erneut abfiltriert, mit Wasser neutral gewaschen und bei 80°C und 0,2 bar 15 Stunden getrocknet. Es wurde eine Produktmenge von 5500 g erhalten. An dem Produkt wurde eine Viskositätszahl (VZ) von 163 cm³/g und eine Glastemperatur (Tg) von 144°C gemessen.

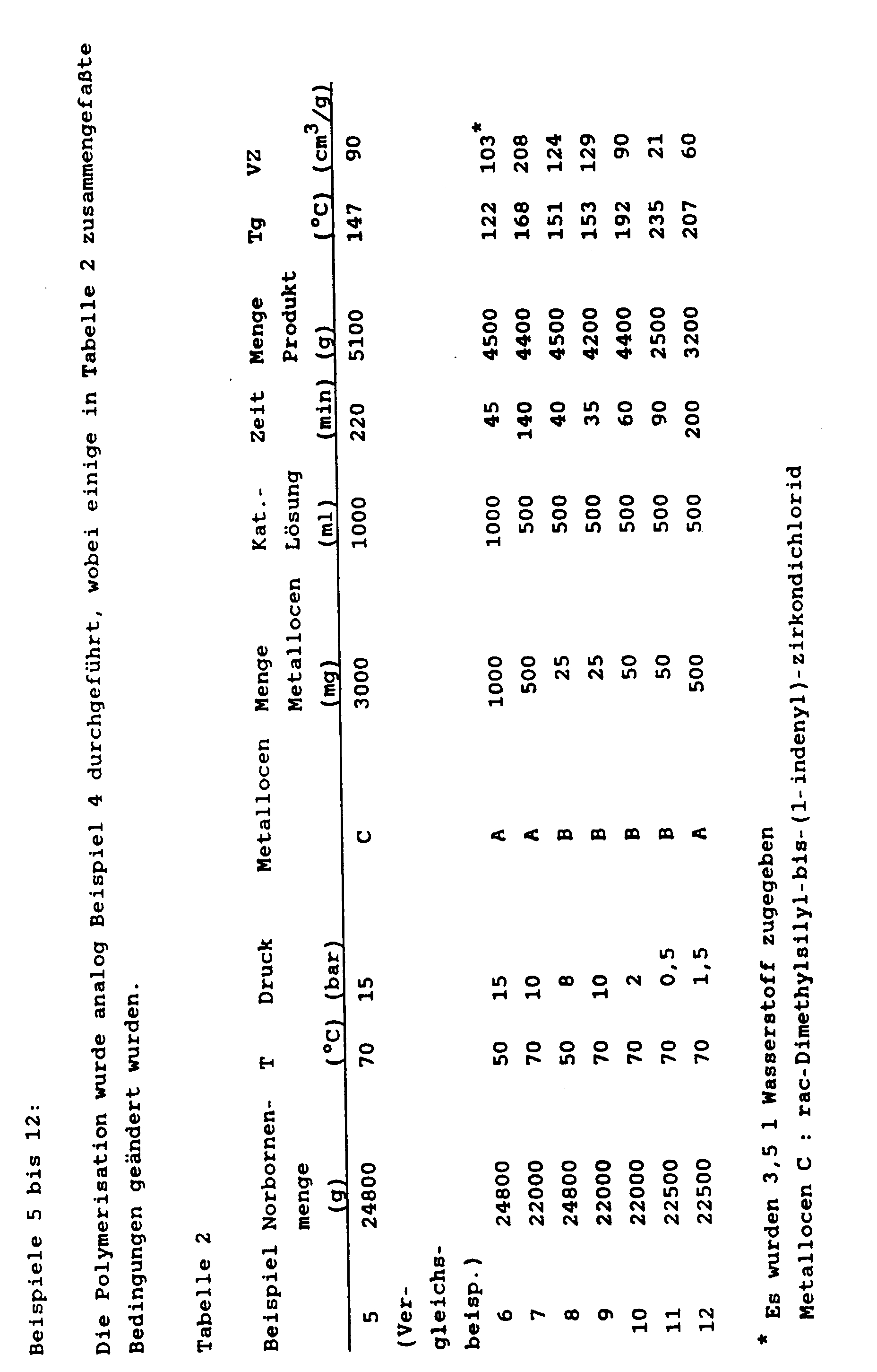

### Vergleichsbeispiel 13 (Lösungspolymerisation)

Ein sauberer und trockener 1,5-dm³-Polymerisationsreaktor mit Rührer wurde mit Stickstoff und dann mit Ethylen gespült und mit einer Lösung aus 411 g Norbornen (Nb) und 86 cm³ Toluol gefüllt. Unter Rühren wurde dann der Reaktor auf eine Temperatur von 70°C gebracht und 8 bar Ethylen aufgedrückt.

Danach wurden 20 cm³ toluolische Methylaluminoxanlösung (10,1 Gew.-% Methylaluminoxan mit Molmasse 1 300 g/mol nach kryoskopischer Bestimmung) in den Reaktor dosiert und die Mischung 15 min bei 70°C gerührt, wobei durch Nachdosieren der Ethylendruck bei 8 bar gehalten wurde. Parallel dazu wurden 71,8 mg Dicyclopentadienylzirkoniumdichlorid in 10 cm³ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann 2 Stunden bei 70°C polymerisiert, wobei der Ethylendruck durch Nachdosieren bei 8 bar gehalten wurde. Dann wurde der Reaktorinhalt schnell in ein Rührgefäß abgelassen, in dem 100 cm³ Isopropanol vorgelegt waren. Die Mischung wurde in 2 dm³ Aceton eingetropft, 10 min gerührt und dann der suspendierte polymere Feststoff abfiltriert.

Das abfiltrierte Polymer wurde dann in 2 dm³ einer Mischung aus zwei Teilen 3-normaler Salzsäure und einem Teil Ethanol gegeben und diese Suspension 2 Stunden gerührt. Das Polymer wurde dann erneut abfiltriert, mit Wasser neutral gewaschen und bei 80°C und 0,2 bar 15 Stunden getrocknet. Es wurde eine Produktmenge von 73,5 g erhalten. An dem Produkt wurde eine Viskositätszahl (VZ) von 17 cm³/g und eine Glastemperatur (Tg) von 168,5°C gemessen.

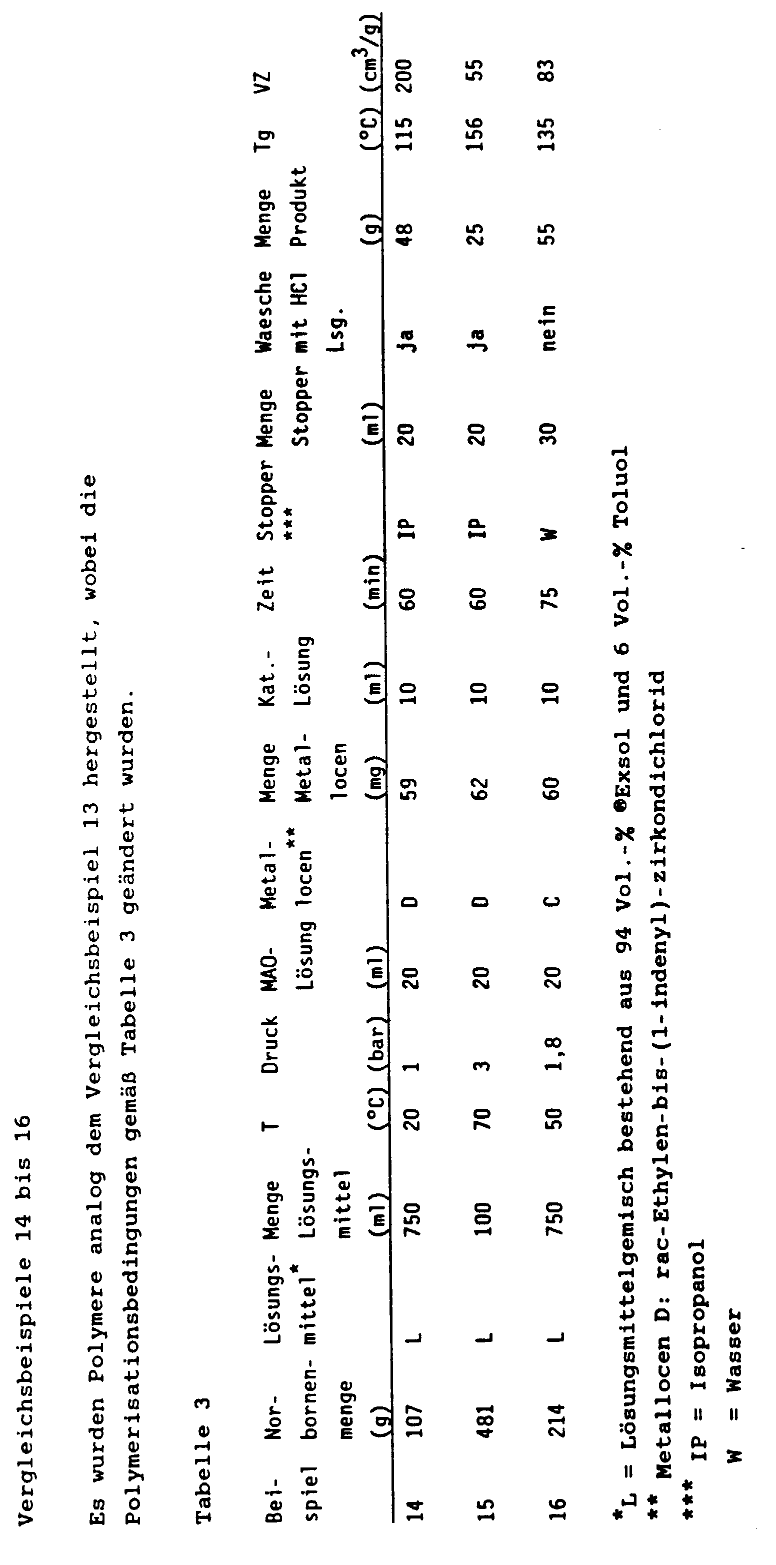

### Beispiel 17

Aus den Polymeren gemäß Beispielen 4 und 6 bis 9 wurden jeweils 20 Gew.-%ige Toluollösungen in 250-ml-Kolben bei 70°C hergestellt. Die Lösungen waren klar und fließfähig. Die Fließfähigkeit der Lösungen wurde durch Kippen der Kolben untersucht. Nach dem Abkühlen der Lösungen auf Raumtemperatur wurde die Fließfähigkeit zeitabhängig untersucht. Alle untersuchten Lösungen waren auch nach 50 Tagen fließfähig.

### Vergleichsbeispiel 18

Aus verschiedenen Polymeren, die gemäß den Vergleichsbeispielen 5 und 13 bis 16 hergestellt wurden, sind Lösungen analog Beispiel 17 hergestellt und untersucht worden. Alle Lösungen waren schon nach 8 Stunden bei Raumtemperatur nicht mehr fließfähig. Die Lösungen waren alle vergelt, d.h. bei dem Kipp-Experiment blieben sie formstabil.

### Beispiel 19

An verschiedenen Proben wurden GPC-Messungen (Gel-Permeation-Chromatography) durchgeführt. Es wurden ein Chromatograph vom Typ 150-C ALC/GPC Millipore Waters Chrom. und ein Säulensatz bestehend aus 4 Shodex-Säulen vom Typ AT-80 M/S verwendet. Das Lösungsmittel war o-Dichlorbenzol.

Weitere Parameter der Messung waren:

| | |
|---|---|
| Temperatur | 135°C |
| Durchfluß | 0,5 ml/min |
| Probenmenge | 0,4 ml Probenlösung |
| Konzentration der Probenlösung | 0,1 g/dl |
| Kalibrierung | nach Polyethylenstandard |

Die Ergebnisse der GPC-Messung sind folgende:

| Probe | Massenmittel M_{w} g/mol | Zahlenmittel Mₙ g/mol | M_{w}/Mₙ |
|---|---|---|---|
| gemäß Vergleichsbeisp. 5 | 75.600 | 37.200 | 2 |
| gemäß Beispiel 7 | 391.000 | 163.000 | 2,4 |

### Beispiel 20

An Proben gemäß Beispielen 4 bis 7 wurden 13-C-NMR Spektren aufgenommen. Die Proben wurden in einem Gemisch aus Hexachlorbutadien und Tetrachlorethan-D2 gelöst und mit einem 400 MHz-NMR-Gerät vermessen. Die Spektren sind vergleichsweise in Figur 1 wiedergegeben.
Überraschenderweise ist zu erkennen, daß sich die Struktur der Polymere gemäß Beispielen 4, 6 und 7 deutlich von der gemäß Vergleichsbeispiel 5 unterscheidet.

Bei dem in Vergleichsbeispiel 5 verwendeten Metallocen C (rac-Dimethylsilyl-bis-(1-indenyl)-zirkondichlorid) sind die Substituenten R¹⁶ und R¹⁷ identisch.

### Beispiele 21 - 23

Die Polymerisationen wurden analog Beispiel 1 durchgeführt, wobei einige, in Tabelle 4 zusammengefaßte Bedingungen geändert wurden.

**Tabelle 4**

| Beispiel | Cycloolefin (g) | Metallocen | Menge Metallo. (mg) | Druck/ Ethylen (bar) | Zeit (h) | Ausbeute (g) | VZ (cm³/g) | Tg (°C) |
|---|---|---|---|---|---|---|---|---|
| 21 | Norbornen | E | 1 | 6 | 1 | 36 | 119 | 178 |
| 22 | Norbornen | F | 20 | 6 | 3 | 33 | 125 | 183 |
| 23 | Norbornen | G | 1 | 1,5 | 1 | 22 | 40 | 239 |
| E = Methyl(phenyl)methylen-(9-fluorenyl)-cyclopentadienyl-zirkondichlorid F = Diphenylmethylen-(9-fluorenyl)-cyclopentadienyl-hafniumdichlorid G = Isopropylen-(1-indenyl)-cyclopentadienyl-zirkondichlorid | | | | | | | | |

### Beispiel 24 (Polynorbornen)

In einem 1,5-dm³-Polymerisationsreaktor wurden 800 g Norbornen mit 25 cm³ 10,1 Gew.-%iger toluolischer Methylaluminoxanlösung unter Erwärmen verflüssigt (siehe Beispiel 1).

Parallel dazu wurden 250 mg Diphenylmethylen-(9-fluorenyl)-cyclopentadienylzirkondichlorid in 25 cm³ 10,1 %iger toluolischer Methylaluminoxanlösung gelöst und obiger Schmelze zugegeben. Unter Argon wurde 160 Stunden bei 35°C polymerisiert.

Die Aufarbeitung der Lösung erfolgt analog Beispiel 1. Nach Trocknung wurden 41 g eines farblosen Pulvers erhalten.
An dem Produkt wurde eine Viskositätszahl VZ von 44 cm³/g gemessen.
Mittels DSC konnte bis 380°C weder eine Glasstufe noch ein Schmelzpunkt detektiert werden.
Unter dem Heiztischmikroskop konnte bei ca. 400°C eine Erweichung beobachtet werden.

13 C-NMR-Spektren (analog Bsp. 20) zeigten sehr breite Signale mit Peakmaxima bei 31, 40 und 50 ppm. Das Produkt enthält nach NMR- und Infrarotspektren keine Doppelbindung.

### Beispiel 25

Vom Polymer aus Bsp. 24 wurden 10-20 %ige toluolische Lösungen hergestellt und auf Glasplatten mit Hilfe einer Rakel ausgestrichen. Nach Trocknung im Vakuum (0,2 bar) bei 80°C wurden transparente farblose Filme mit Dicken zwischen 1 bis 100 µm erhalten.

## Patentansprüche (Patentansprüche für folgende(n) Vertragsstaat(en): BE, DE, ES, FR, GB, IT, NL)

1. Verfahren zur Herstellung eines Cycloolefinpolymers oder copolymers durch Polymerisation von 0,1 bis 100 Gew.-%, bezogen auf die Gesamtmenge der Monomeren, mindestens eines Monomers der Formeln I, II, III, IV, V oder VI 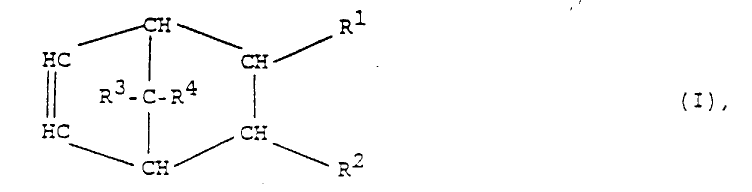 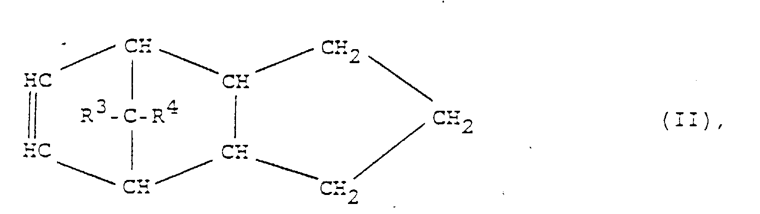 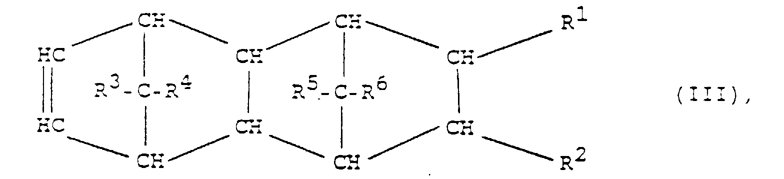 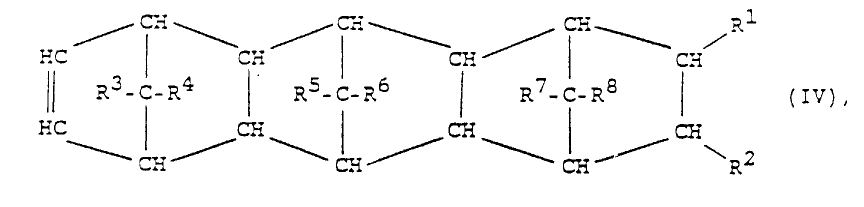 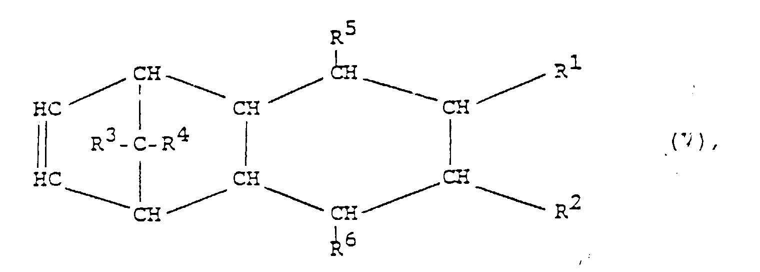 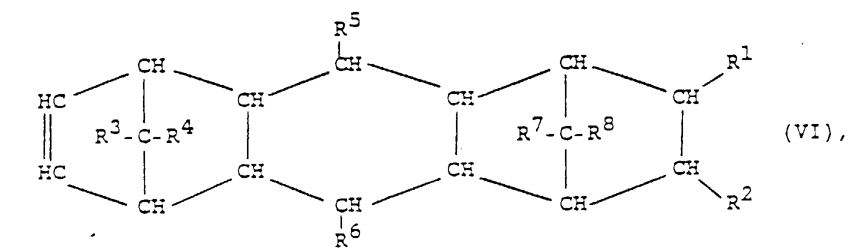 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können,
0 bis 99,9 Gew.-%, bezogen auf die Gesamtmenge der monomeren, eines Cycloolefins der Formel VII 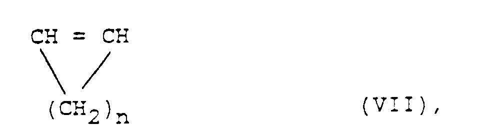 worin n eine Zahl von 2 bis 10 ist, und
0 bis 99,9 Gew.-%, bezogen auf die Gesamtmenge der Monomeren, mindestens eines acyclischen 1-Olefins der Formel VIII 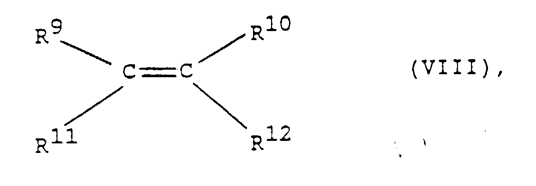 worin R⁹, R¹⁰, R¹¹ und R¹² gleich oder verschieden sind und ein Wasserstoffatom oder einen C₁-C₈-Alkylrest bedeuten, bei Temperaturen von 20 bis 150°C und einem Druck von 0,01 bis 64 bar, in Gegenwart eines Katalysators, welcher aus einem Aluminoxan der Formel IX 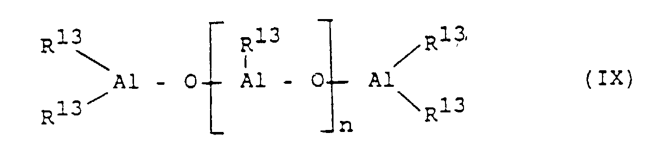 für den linearen Typ und/oder der Formel X 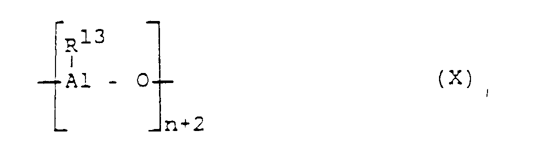 für den cyclischen Typ, wobei in den Formeln IX und X R¹³ eine C₁-C₆-Alkylgruppe oder Phenyl oder Benzyl bedeutet und n eine ganze Zahl von 2 bis 50 ist, und einem Metallocen der Formel XI 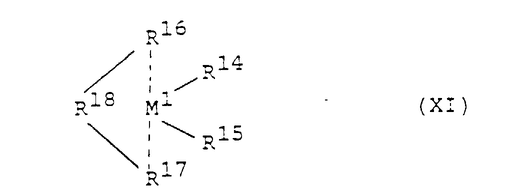 besteht, worin
M¹ Titan, Zirkon, Hafnium, Vanadium, Niob oder Tantal ist,
R¹⁴ und R¹⁵ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R¹⁶ und R¹⁷ verschieden sind und einen ein- oder mehrkernigen Kohlenwasserstoffrest, welcher mit dem Zentralatom M¹ eine Sandwichstruktur bilden kann,
bedeuten,
R¹⁸ 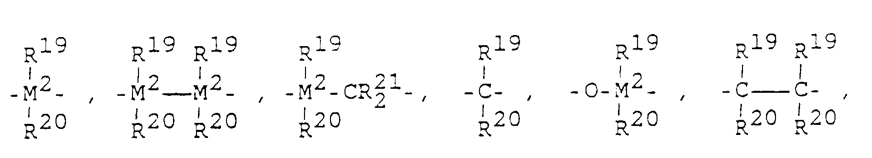 = BR¹⁹ = AlR¹⁹, -Ge-, -Sn-, -O-, -S-,= SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀- Alkylgruppe, eine C₁-C₁₀)-Fluoralkylgruppe, eine C₆-C₁₀-Fluorarylgruppe, eine C₆-C₁₀-Arylgruppe, eine C₁-c₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
M² Silizium, Germanium oder Zinn ist, wobei die Polymerisation in dem flüssigen Cyclcoolefinmonomer oder Cycloolefinmonomergemisch oder in eimer mindestens 95-volumenprozentigen Cycloolefinlösung durchgeführt wird und die Polymerlösung nach der Polymerisation in einem Dünnschichtverdampfer aufkonzentriert wird.

2. Verfahren gemäß Anspruch 1, wobei die Polymerisation im flüssigen Cycloolefinmonomer oder Cycloolefinmonomergemisch durchgeführt wird.

3. Verfahren gemäß Anspruch 1 oder 2, wobei das Metallocen der Formel XI Diphenylmethylen-(9-fluorenyl)-cyclopentadienyl-zirkondichlorid, Isopropylen-(9-fluorenyl)-cyclopentadienyl-zirkondichlorid, Methyl(phenyl)-methylen-(9-fluorenyl)-cyclopentadienyl-zirkondichlorid oder Diphenylmethylen-(9-fluorenyl)-cyclopentadienyl-hafniumdichlorid ist.

4. Verfahren gemäß einem oder mehreren der Ansprüche 7 bis 3, wobei das polycylische Olefin Norbornen oder Tetracyclododecen ist.

5. Verfahren gemäß einem oder mehreren der Ansprüche 1 bis 4, wobei ein Copolymer aus Norbornen und Ethylen hergestellt wird.

## Patentansprüche (Patentansprüche für folgende(n) Vertragsstaat(en): AT, CH, LI, SE)

1. Verfahren zur Herstellung eines Cycloolefinpolymers oder -copolymers durch Polymerisation von 0,1 bis 100 Gew.-%, bezogen auf die Gesamtmenge der Monomeren, mindestens eines Monomers der Formeln I, II, III, IV, V oder VI 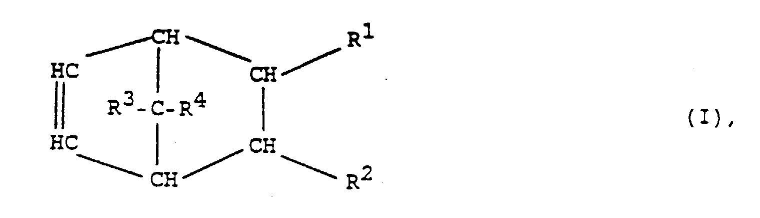 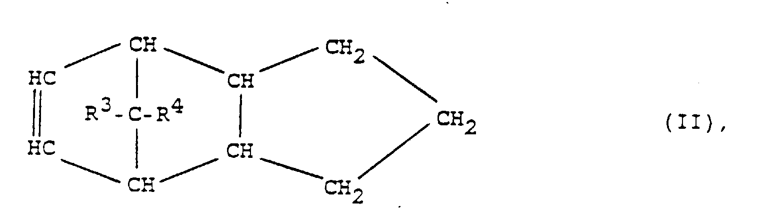 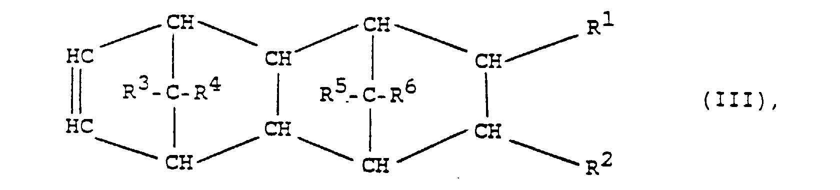 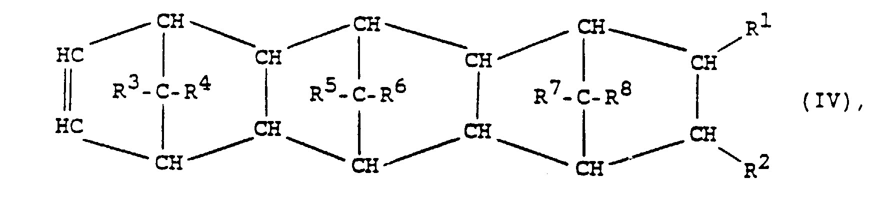 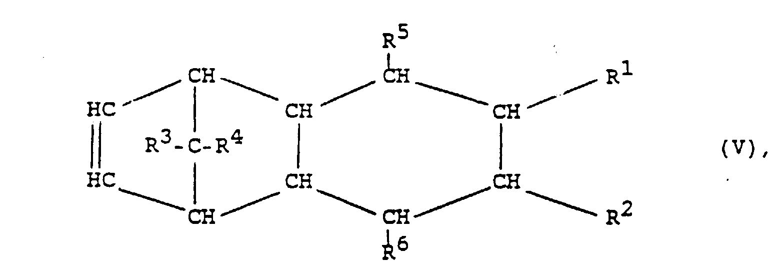 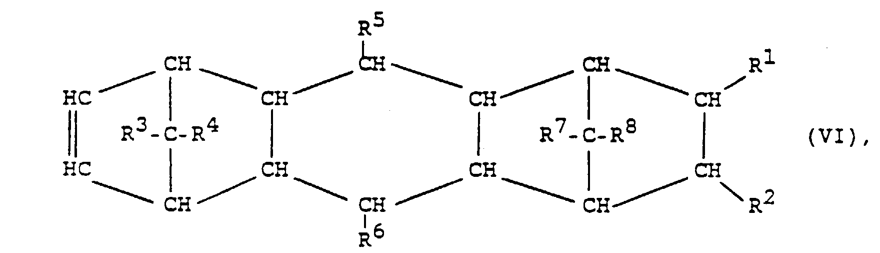 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können,
0 bis 99,9 Gew.-%, bezogen auf die Gesamtmenge der Monomeren, eines Cycloolefins der Formel VII 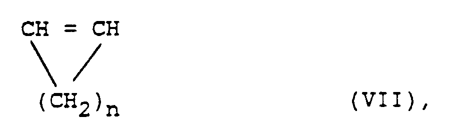 worin n eine Zahl von 2 bis 10 ist, und
0 bis 99,9 Gew.-%, bezogen auf die Gesamtmenge der Monomeren, mindestens eines acyclischen 1-Olefins der Formel VIII 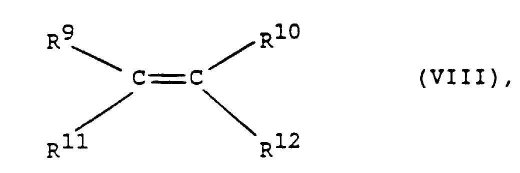 worin R⁹, R¹⁰, R¹¹ and R¹² gleich oder verschieden sind und ein Wasserstoffatom oder einen C₁-C₈-Alkylrest bedeuten, bei Temperaturen von 20 bis 150°C und einem Druck von 0,01 bis 64 bar, in Gegenwart eines Katalysators, welcher aus einem Aluminoxan der Formel IX 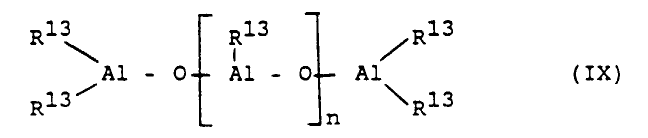 für den linearen Typ und/oder der Formel X 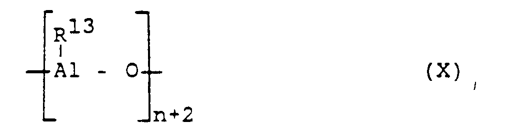 für den cyclischen Typ, wobei in den Formeln IX und X R¹³ eine C₁-C₆-Alkylgruppe oder Phenyl oder Benzyl bedeutet und n eine ganze Zahl von 2 bis 50 ist, und einem Metallocen der Formel XI 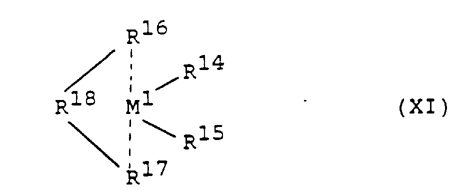 besteht, worin
M¹ Titan, Zirkon, Hafnium, Vanadium, Niob oder Tantal ist,
R¹⁴ und R¹⁵ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R¹⁶ und R¹⁷ einen ein- oder mehrkernigen Kohlenwasserstoffrest, welcher mit dem Zentralatom M¹ eine Sandwichstruktur bilden kann,
bedeuten,
R¹⁸ 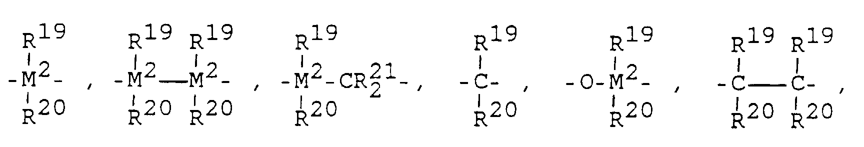 = BR¹⁹ = AlR¹⁹, -Ge-, -Sn-, -O-, -S-,= SO, = SO₂, = NR¹⁹, = CO, = PR¹⁹ oder = P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
M² Silizium, Germanium oder Zinn ist, wobei die Polymerisation in dem flüssigen Cycloolefinmonomer oder Cycloolefinmonomergemisch oder in einer mindestens 95-volumenprozentigen Cycloolefinlösung durchgeführt wird und in der Formel XI die Substituenten R¹⁶ und R¹⁷ verschieden sind.

2. Verfahren gemäß Anspruch 1, wobei die Polymerisation im flüssigen Cycloolefinmonomer oder Cycloolefinmonomergemisch durchgeführt wird.

3. Verfahren gemäß Anspruch 1 oder 2, wobei das Metallocen der Formel XI Diphenylmethylen-(9-fluorenyl)-cyclopentadienyl-zirkondichlorid, Isopropylen-(9-fluorenyl)-cyclopentadienyl-zirkondichlorid, Methyl(phenyl)-methylen-(9-fluorenyl)-cyclopentadienyl-zirkondichlorid oder Diphenylmethylen-(9-fluorenvl)-cyclopentadienyl-hafniumdichlorid ist.

4. Verfahren gemäß einem oder mehreren der Ansprüche 1 bis 3, wobei das polycyclische Olefin Norbornen oder Tetracyclododecen ist.

5. Verfahren gemäß einem oder mehreren der Ansprüche 1 bis 4, wobei ein Copolymer aus Norbornen und Ethylen hergestellt wird.

## Claims (Claims for the following Contracting State(s): BE, DE, ES, FR, GB, IT, NL)

1. A process for the preparation of a cycloolefin polymer or copolymer by polymerization of from 0.1 to 100% by weight, based on the total amount of monomers, of at least one monomer of the formula I, II, III, IV, V or VI 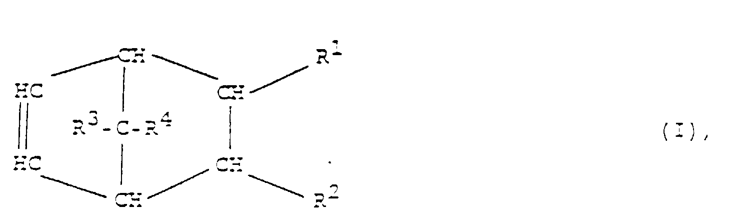 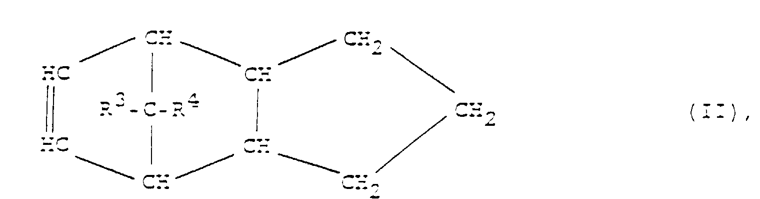 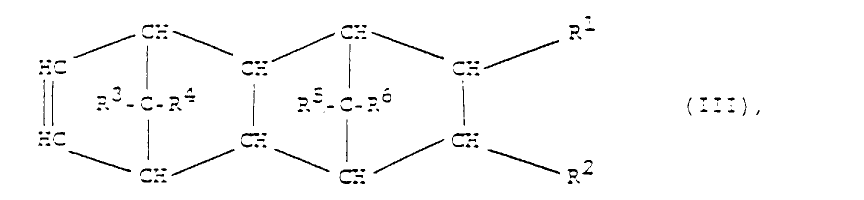 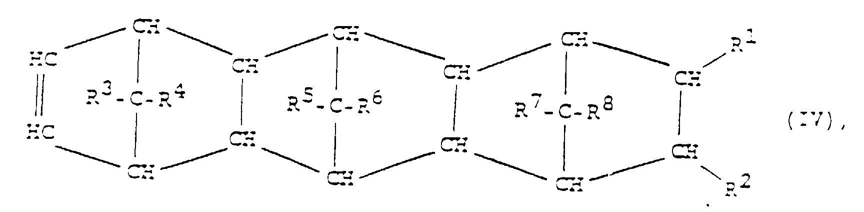 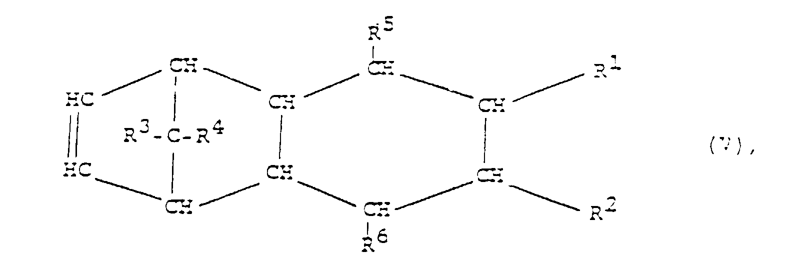 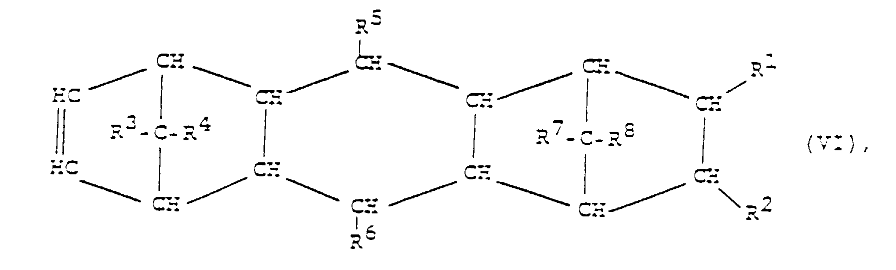 in which R¹, R², R³, R⁴, R⁵, R⁶, R⁷ and R⁸ are identical or different and are a hydrogen atom or a C₁-C₈-alkyl radical, it being possible for identical radicals in the different formulae to have different meanings,
from 0 to 99.9% by weight, based on the total amount of monomers, of a cycloolefin of the formula VII 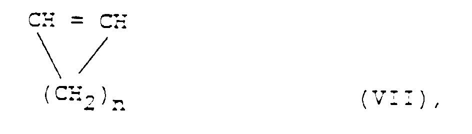 in which n is a number from 2 to 10, and
from 0 to 99.9% by weight, based on the total amount of monomers, of at least one acyclic 1-olefin of the formula VIII 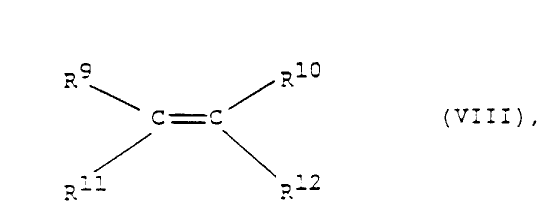 in which R⁹, R¹⁰, R¹¹ and R¹² are identical or different and are a hydrogen atom or a C₁-C₈-alkyl. radical, at temperatures of from 20 to 150°C and at a pressure of from 0.01 to 64 bar, in the presence of a catalyst which comprises an aluminoxane of the formula IX 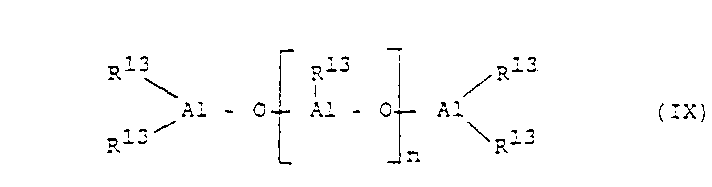 for the linear type and/or of the formula X 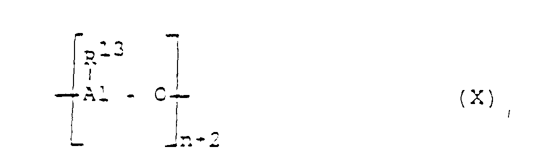 for the cyclic type, where, in the formulae IX and X, R¹³ is a C₁-C₆-alkyl group or phenyl or benzyl, and n is an integer from 2 to 50, and a metallocene of the formula XI 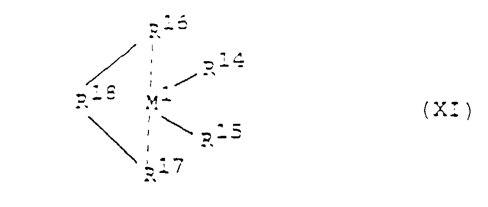 in which
M¹ is titanium, zirconium, hafnium, vanadium, niobium or tantalum,
R¹⁴ and R¹⁵ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R¹⁶ and R¹⁷ are different and are a monocyclic or polycyclic hydrocarbon radical which can form a sandwich structure with the central atom M¹,
R¹⁸ is 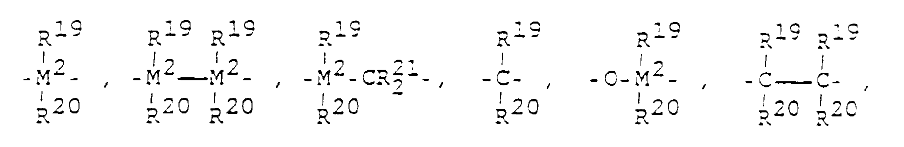 =BR¹⁹=AlR¹⁹, -Ge-, -Sn-, -O-, -S-, =SO, =SO₂, =NR¹⁹, =CO, =PR¹⁹ or =P(O)R¹⁹ where R¹⁹, R²⁰ and R²¹ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹⁹ and R²⁰ or R¹⁹ and R²¹, in each case with the atoms connecting them, form a ring, and
M² is silicon, germanium or tin, where the polymerization is carried out in the liquid cycloolefin monomer or cycloolefin monomer mixture or in an at least 95 percent by volume cycloolefin solution and the polymer solution is concentrated in a thin-film evaporator after the polymerization.

2. The process as claimed in claim 1, where the polymerization is carried out in the liquid cycloolefin monomer or cycloolefin monomer mixture.

3. The process as claimed in claim 1 or 2, where the metallocene of the formula XI is diphenylmethylene-(9-fluorenyl)cyclopentadienylzirconium dichloride, isopropylene(9-fluorenyl)cyclopentadienylzirconium dichloride, methyl(phenyl)methylene(9-fluorenyl)-cyclopentadienylzirconium dichloride or diphenyl-methylene(9-fluorenyl)cyclopentadienylhafnium dichloride.

4. The process as claimed in one or more of claims 1 to 3, where the polycyclic olefin is norbornene or tetracyclododecene.

5. The process as claimed in one or more of claims 1 to 4, where a copolymer of norbornene and ethylene is prepared.

## Claims (Claims for the following Contracting State(s): AT, CH, LI, SE)

1. A process for the preparation of a cycloolefin polymer or copolymer by polymerization of from 0.1 to 100% by weight, based on the total amount of monomers, of at least one monomer of the formula I, II, III, IV, V or VI 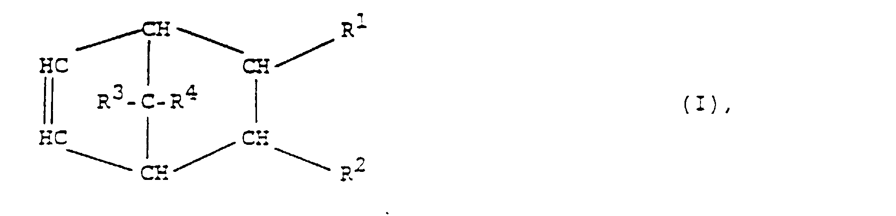 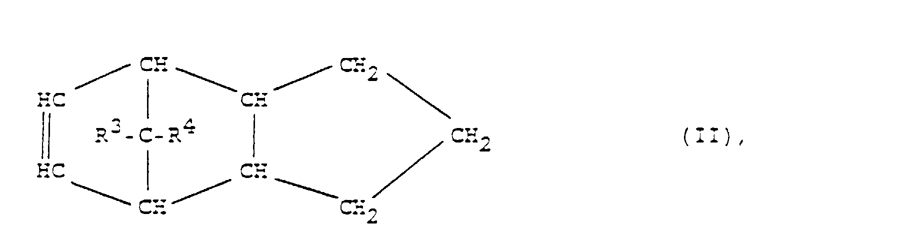 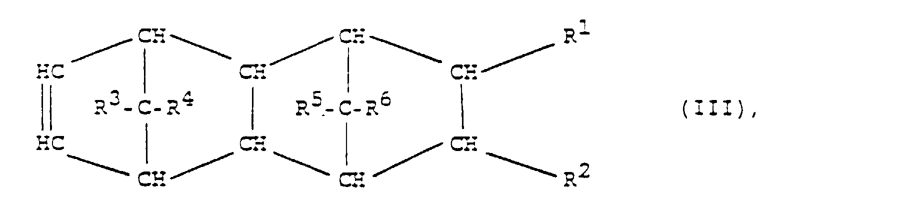 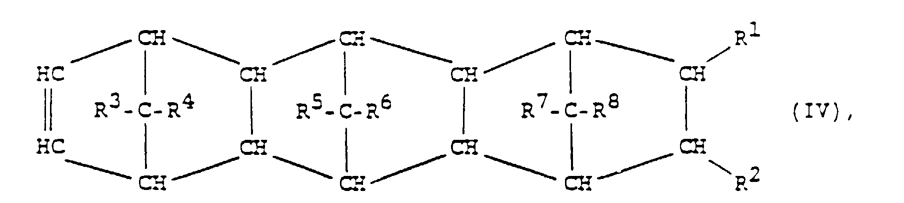 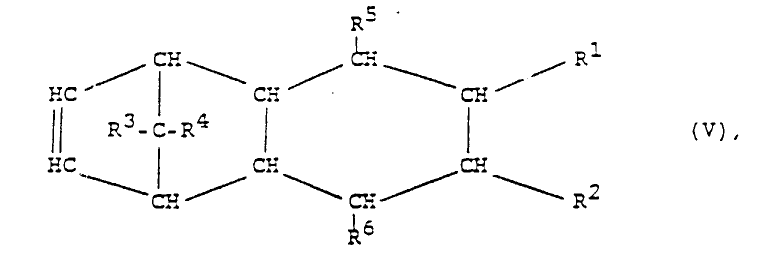 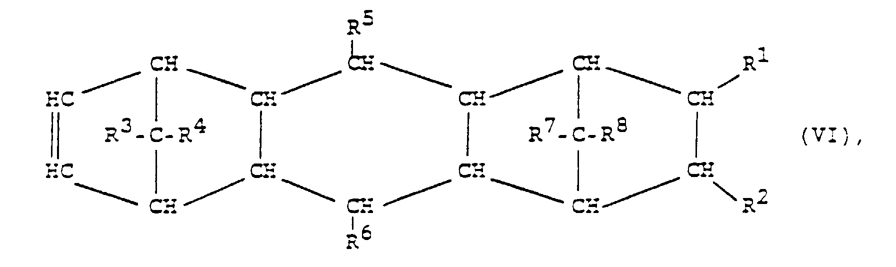 in which R¹, R², R³, R⁴, R⁵, R⁶, R⁷ and R⁸ are identical or different and are a hydrogen atom or a C₁-C₈-alkyl radical, it being possible for identical radicals in the different formulae to have different meanings,
from 0 to 99.9% by weight, based on the total amount of monomers, of a cycloolefin of the formula VII 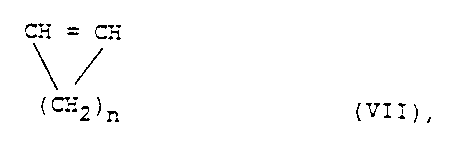 in which n is a number from 2 to 10, and
from 0 to 99.9% by weight, based on the total amount of monomers, of at least one acyclic 1-olefin of the formula VIII 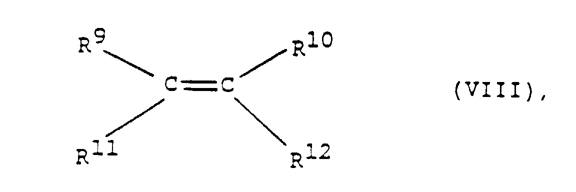 in which R⁹, R¹⁰, R¹¹ and R¹² are identical or different and are a hydrogen atom or a C₁-C₈-alkyl. radical, at temperatures of from 20 to 150°C and at a pressure of from 0.01 to 64 bar, in the presence of a catalyst which comprises an aluminoxane of the formula IX 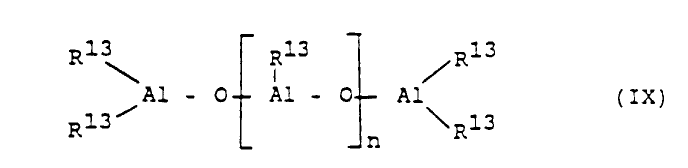 for the linear type and/or of the formula X 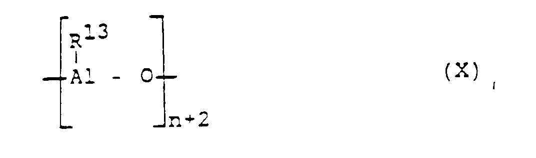 for the cyclic type, where, in the formulae IX and X, R¹³ is a C₁-C₆-alkyl group or phenyl or benzyl, and n is an integer from 2 to 50, and a metallocene of the formula XI 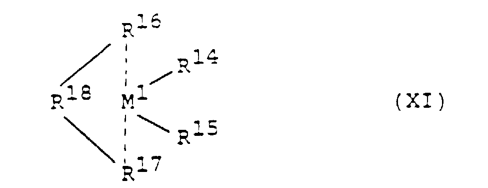 in which
M¹ is titanium, zirconium, hafnium, vanadium, niobium or tantalum,
R¹⁴ and R¹⁵ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R¹⁶ and R¹⁷ are a monocyclic or polycyclic hydrocarbon radical which can form a sandwich structure with the central atom M¹,
R¹⁸ is 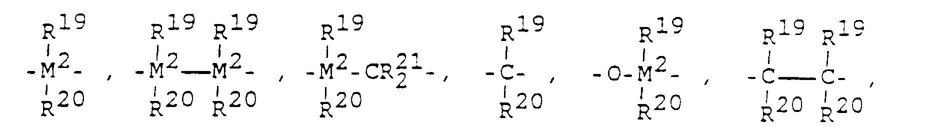 =BR¹⁹=AlR¹⁹, -Ge-, -Sn-, -O-, -S-, =SO, =SO₂, =NR¹⁹, =CO, =PR¹⁹ or =P(O)R¹⁹ where R¹⁹, R²⁰ and R²¹ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹⁹ and R²⁰ or R¹⁹ and R²¹, in each case with the atoms connecting them, form a ring, and
M² is silicon, germanium or tin, where the polymerization is carried out in the liquid cycloolefin monomer or cycloolefin monomer mixture or in an at least 95 percent by volume cycloolefin solution and the substituents R¹⁶ and R¹⁷ in the formula XI are different.

2. The process as claimed in claim 1, where the polymerization is carried out in the liquid cycloolefin monomer or cycloolefin monomer mixture.

3. The process as claimed in claim 1 or 2, where the metallocene of the formula XI is diphenylmethylene-(9-fluorenyl)cyclopentadienylzirconium dichloride, isopropylene(9-fluorenyl)cyclopentadienylzirconium dichloride, methyl(phenyl)methylene(9-fluorenyl)-cyclopentadienylzirconium dichloride or diphenyl-methylene(9-fluorenyl)cyclopentadienylhafnium dichloride.

4. The process as claimed in one or more of claims 1 to 3, where the polycyclic olefin is norbornene or tetracyclododecene.

5. The process as claimed in one or more of claims 1 to 4, where a copolymer of norbornene and ethylene is prepared.

## Revendications (Revendications pour l'(les) Etat(s) contractant(s) suivant(s): BE, DE, ES, FR, GB, IT, NL)

1. Procédé pour la préparation d'un copolymère ou d'un polymère cyclooléfinique par polymérisation de 0,1 à 100 % en poids, par rapport à la quantité totale du monomère, d'au moins un monomère de formule I, II, III, IV, V ou VI 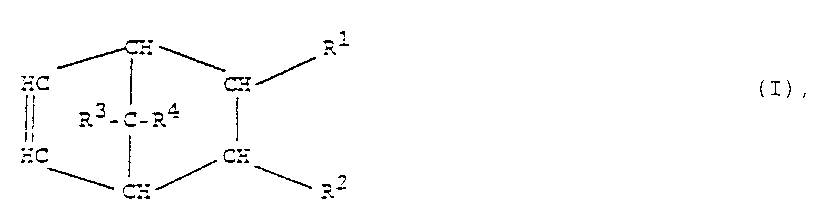 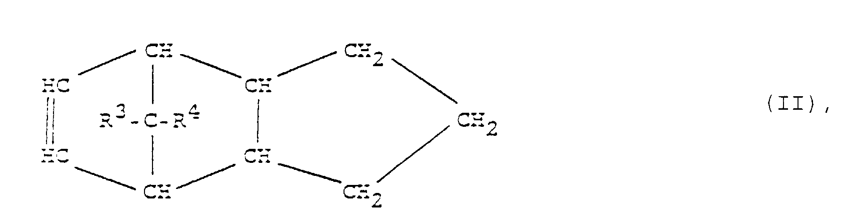 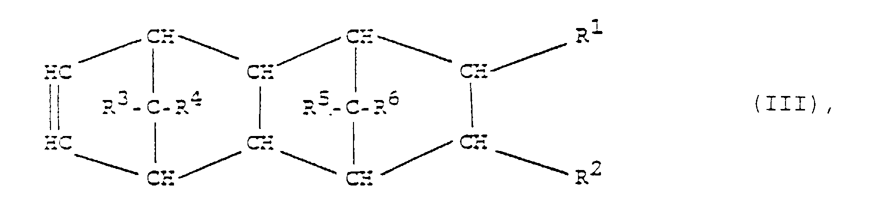 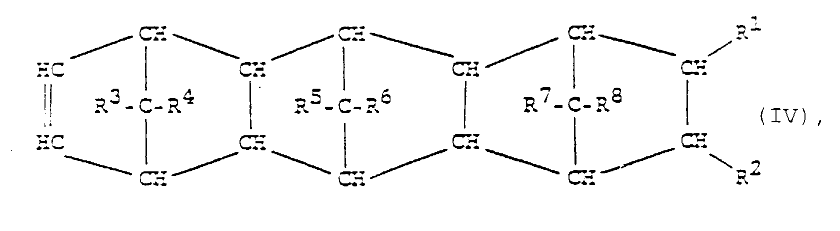 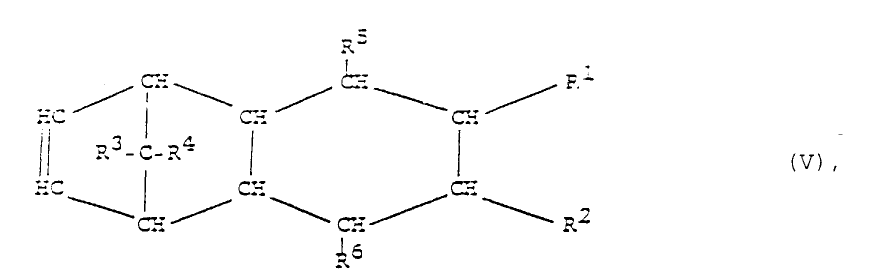 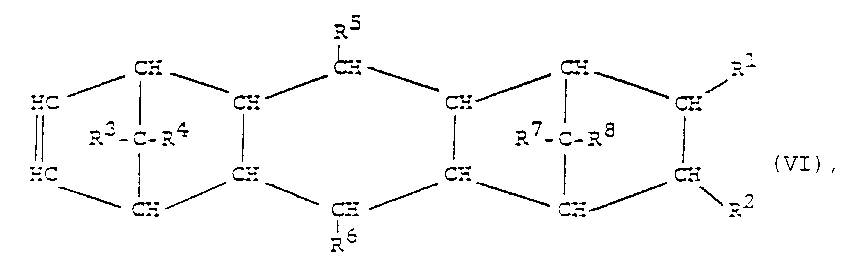 dans lesquelles R¹, R², R³, R⁴, R⁵, R⁶, R⁷ et R⁸ sont identiques ou différents et représentent un atome d'hydrogène ou un reste alkyle en C₁-C₈, des restes identiques dans les différentes formules pouvant avoir des significations différentes,
de 0 à 99,9 % en poids par rapport à la quantité totale de monomère, une cyclooléfine de formule VII : 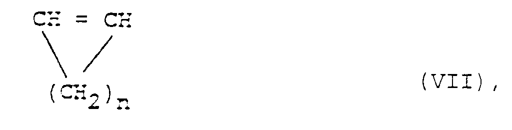 dans laquelle n va de 2 à 10 et,
de 0 à 99,9 % en poids par rapport à la quantité totale du monomère, au moins une 1-oléfine acyclique de formule VIII : 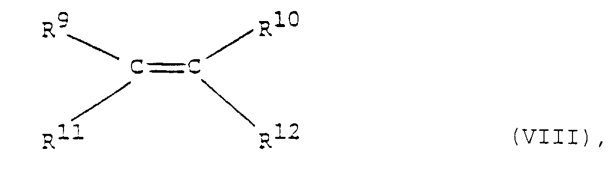 dans laquelle R⁹, R¹⁰, R¹¹ et R¹² sont identiques ou différents et représentent un atome d'hydrogène ou un reste alkyle en C₁-C₈, à des températures de 20 à 150 °C et sous une pression de 0,01 à 64 bar, en présence d'un catalyseur qui est composé d'un aluminoxane de formule IX 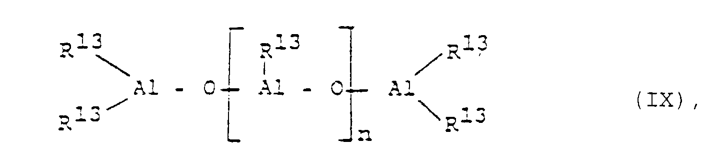 pour le type linéaire et/ou de formule X 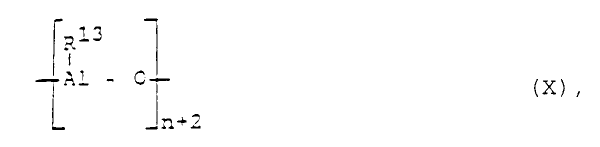 pour le type cyclique, dans les formules IX et X, R¹³ étant un groupe alkyle en C₁-C₆ ou phényle ou benzyle et n est un entier de 2 à 50 et d'un métallocène de formule XI 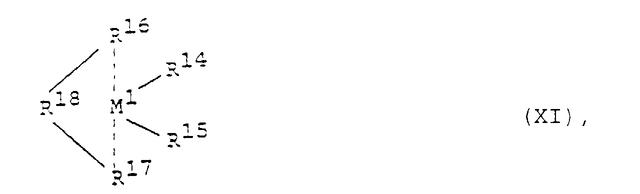 dans laquelle
M¹ représente le titane, le zirconium, l'hafnium, le vanadium, le niobium ou le tantale,
R¹⁴ et R¹⁵ sont identiques ou différents et représentent chacun un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R¹⁶ et R¹⁷ sont différents et représentent un reste hydrocarboné mono- ou polycyclique, lequel peut former avec l'atome central M¹ une structure sandwich,
R¹⁸ représente 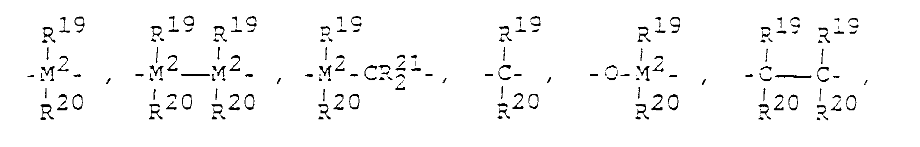 =BR¹⁹, =AlR¹⁹, -Ge-, -Sn-, -O-, -S-, =SO, =SO₂, =NR¹⁹, =CO, =PR¹⁹ ou =P(O)R¹⁹, où R¹⁹, R²⁰ et R²¹ sont identiques ou différents et représentent un atome d'hydrogène, un atome d'halogène, un groupe alkyle en C₁-C₁₀, un groupe fluoralkyle en C₁-C₁₀, un groupe fluoraryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀ ou R¹⁹ et R²⁰ ou R¹⁹ et R²¹ chacun avec les atomes qui les relient, forment un cycle et
M² représente le silicium, le germanium ou l'étain, la polymérisation étant mise en oeuvre dans le monomère cyclooléfinique ou le mélange des monomères cyclooléfinique ou dans une solution de cyclooléfine au moins à 95 % et la solution de polymère est concentrée après polymérisation dans un évaporateur à couche mince.

2. Procédé selon la revendication 1, où on met en oeuvre la polymérisation dans un monomère cyclooléfinique ou mélange de monomères cyclooléfiniques liquides.

3. Procédé selon la revendication 1 ou 2, où le métallocène de formule XI est le dichlorure de diphénylméthylène-(9-fluorényl)-cyclopentadiényl-zirconium, le dichlorure d'isopropylène- (9-fluorényl)-cyclopentadiénylzirconium, le dichlorure de méthyl (phényl)méthylène-(9-fluorényl)-cyclopentadiényl-zirconium ou le dichlorure de diphénylméthylène-(9-fluorényl)-cyclopentadiénylhafnium.

4. Procédé selon une ou plusieurs des revendications 1 à 3, où l'oléfine polycyclique est le norbornène ou le tétracyclododécène.

5. Procédé selon une ou plusieurs des revendications 1 à 4, où on prépare un copolymère de norbornène et d'éthylène.

## Revendications (Revendications pour l'(les) Etat(s) contractant(s) suivant(s): AT, CH, LI, SE)

1. Procédé pour la préparation d'un copolymère ou d'un polymère cyclooléfinique par polymérisation de 0,1 à 100 % en poids, par rapport à la quantité totale du monomère, d'au moins un monomère de formule I, II, III, IV, V ou VI 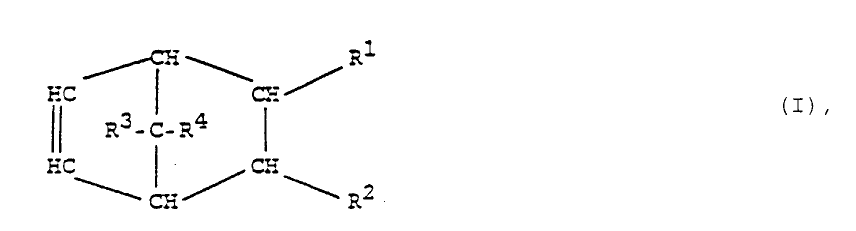 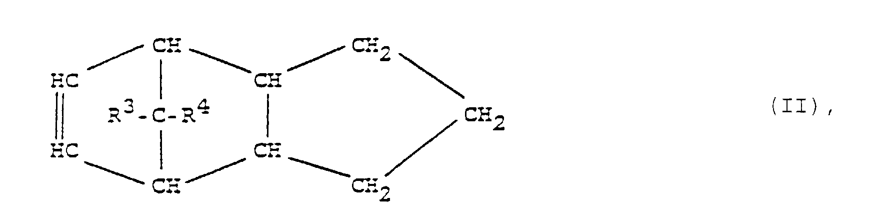 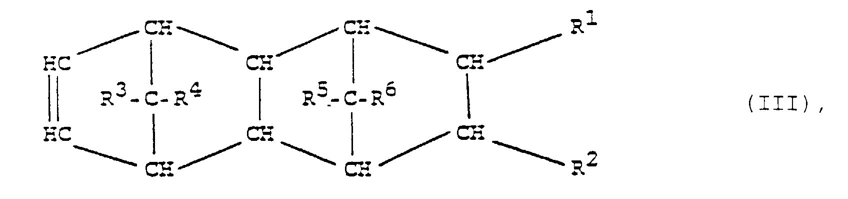 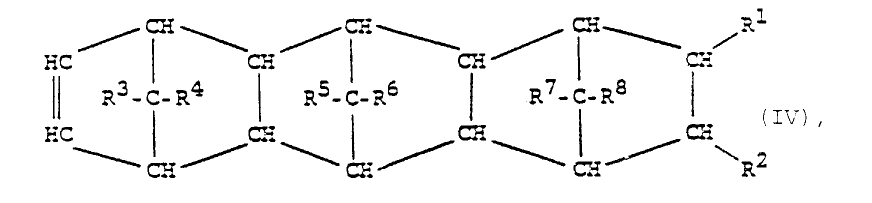 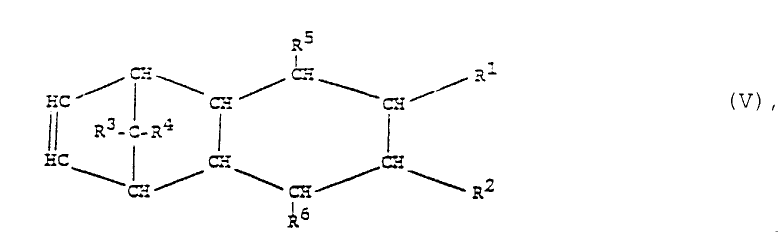 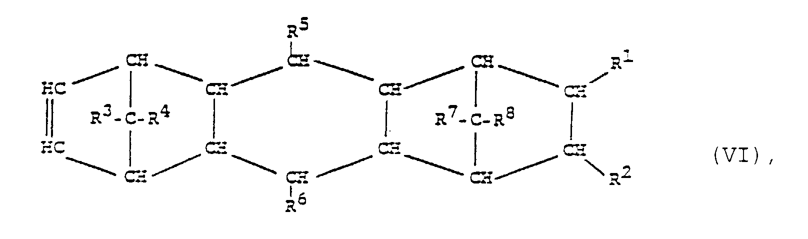 dans lesquelles R¹, R², R³, R⁴, R⁵, R⁶, R⁷ et R⁸ sont identiques ou différents et représentent un atome d'hydrogène ou un reste alkyle en C₁-C₈, des restes identiques dans les différentes formules pouvant avoir des significations différentes,
de 0 à 99,9 % en poids par rapport à la quantité totale de monomère, une cyclooléfine de formule VII : 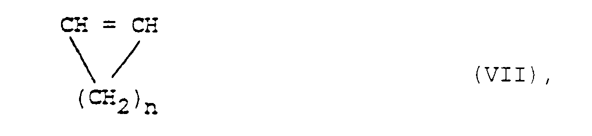 dans laquelle n va de 2 à 10 et,
de 0 à 99,9 % en poids par rapport à la quantité totale du monomère, au moins une 1-oléfine acyclique de formule VIII : 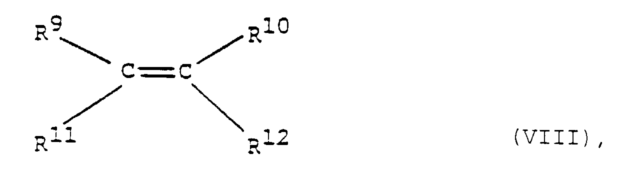 dans laquelle R⁹, R¹⁰, R¹¹ et R¹² sont identiques ou différents et représentent un atome d'hydrogène ou un reste alkyle en C₁-C₈, à des températures de 20 à 150 °C et sous une pression de 0,01 à 64 bar, en présence d'un catalyseur qui est composé d'un aluminoxane de formule IX 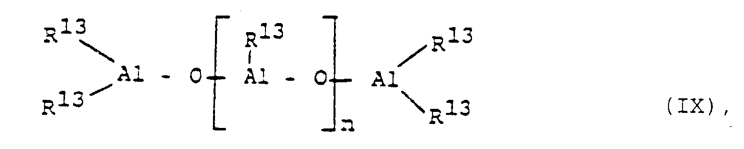 pour le type linéaire et/ou de formule X 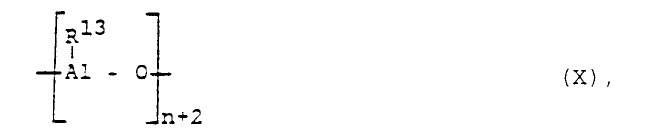 pour le type cyclique, dans les formules IX et X, R¹³ étant un groupe alkyle en C₁-C₆ ou phényle ou benzyle et n est un entier de 2 à 50 et d'un métallocène de formule XI 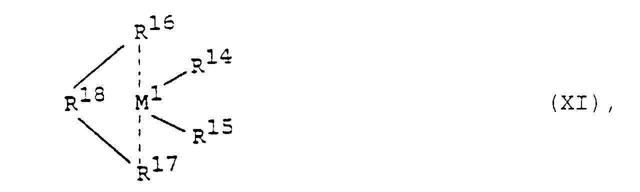 dans laquelle
M¹ représente le titane, le zirconium, l'hafnium, le vanadium, le niobium ou le tantale,
R¹⁴ et R¹⁵ sont identiques ou différents et représentent chacun un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R¹⁶ et R¹⁷ représentent un reste hydrocarboné mono- ou polycyclique, lequel peut former avec l'atome central M¹ une structure sandwich,
R¹⁸ représente 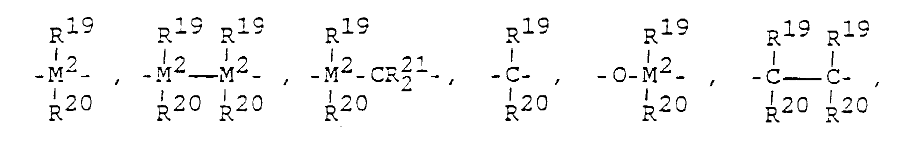 =BR¹⁹, =AlR¹⁹, -Ge-, -Sn-, -O-, -S-, =SO, =SO₂, =NR¹⁹, =CO, =PR¹⁹ ou =P(O)R¹⁹, où R¹⁹, R²⁰ et R²¹ sont identiques ou différents et représentent un atome d'hydrogène, un atome d'halogène, un groupe alkyle en C₁-C₁₀, un groupe fluoralkyle en C₁-C₁₀, un groupe fluoraryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀ ou R¹⁹ et R²⁰ ou R¹⁹ et R²¹ chacun avec les atomes qui les relient, forment un cycle et
M² représente le silicium, le germanium ou l'étain, la polymérisation étant mise en oeuvre dans le monomère cyclooléfinique ou le mélange des monomères cyclooléfinique ou dans une solution de cyclooléfines au moins à 95 % et dans la formule XI les substituants R¹⁶ et R¹⁷ sont différents.

2. Procédé selon la revendication 1, où on met en oeuvre la polymérisation dans un monomère cyclooléfinique ou mélange de monomères cyclooléfiniques liquides.

3. Procédé selon la revendication 1 ou 2, où le métallocène de formule XI est le dichlorure de diphénylméthylène-(9-fluorényl)-cyclopentadiényl-zirconium, le dichlorure d'isopropylène-(9-fluorényl)-cyclopentadiénylzirconium, le dichlorure de méthyl-(phényl)méthylène-(9-fluorényl)-cyclopentadiényl-zirconium ou le dichlorure de diphénylméthylène-(9-fluorényl)-cyclopentadiénylhafnium.

4. Procédé selon une ou plusieurs des revendications 1 à 3, où l'oléfine polycyclique est le norbornène ou le tétracyclododécène.

5. Procédé selon une ou plusieurs des revendications 1 à 4, où on prépare un copolymère de norbornène et d'éthylène.
